Europäisches Patentamt

European Patent Office

Office européen des brevets

(19)

(11) Numéro de publication: **0 095 417**
**A1**

(12)

# DEMANDE DE BREVET EUROPEEN

(21) Numéro de dépôt: **83401016.7**

(22) Date de dépôt: **20.05.83**

(51) Int. Cl.³: **G 21 C 7/12**

(30) Priorité: **26.05.82 FR 8209142**

(43) Date de publication de la demande:
**30.11.83 Bulletin 83/48**

(84) Etats contractants désignés:
**DE FR**

(71) Demandeur: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Mercier l'Abbe, Guy Les Micocouliers Allée No 5 Avenue de Lattre de Tassigny**
**F-13090 Aix en Provence(FR)**

(72) Inventeur: **Thomare, Jean**
**7, rue Edouard Herriot**
**F-91440 Bures sur Yvette(FR)**

(74) Mandataire: **Mongrédien, André et al, c/o BREVATOME 25, rue de Ponthieu**
**F-75008 Paris(FR)**

(54) Dispositif de commande des barres absorbantes dans un système de pilotage d'un réacteur nucléaire.

(57) L'invention concerne un dispositif de commande des barres absorbantes (26) assurant le pilotage et l'arrêt d'un réacteur nucléaire.

Chaque barre absorbante se déplace dans un tube guide vertical (28) au-dessus du coeur (14) du réacteur sous l'action de moyens de pilotage agissant sur un chariot (38) auquel la barre est accrochée par un système (54). La chute en sécurité est commandée par des moyens d'arrêt qui déplacent un organe mobile (52) auquel est sensible le système (54). Les mécanismes de transmission sont logés en partie dans un châssis démontable (64) au-dessus des tubes guides (28) et en partie à l'intérieur de ces deniers.

Application notamment aux réacteurs nucléaires dont la cuve est obturée par la plaque à tubes d'un générateur de vapeur.

EP 0 095 417 A1

./...

Croydon Printing Company Ltd.

FIG.1

La présente invention concerne un dispositif permettant de commander les barres absorbantes susceptibles d'être introduites dans le coeur d'un réacteur nucléaire, afin d'assurer le pilotage de ce réacteur en fonctionnement normal et la chute en sécurité de certaines au moins de ces barres lorsqu'il est nécessaire de procéder à un arrêt d'urgence du réacteur.

On sait que les réacteurs nucléaires sont équipés d'un système de pilotage comportant des barres absorbantes normalement utilisées pour le pilotage du réacteur. De plus, en cas de déclenchement du système de sécurité, ces barres peuvent chuter rapidement dans le coeur du réacteur, ce qui a pour effet d'abaisser instantanément la réactivité à l'intérieur du coeur et, par conséquent, d'arrêter le réacteur. Le système de pilotage assure donc aussi la fonction de premier système d'arrêt, dont la mise en oeuvre intervient lorsqu'il est nécessaire de procéder à un arrêt de sécurité du réacteur.

On sait aussi que la forme des éléments combustibles qui constituent le coeur d'un réacteur nucléaire varie selon le type de réacteur concerné et, pour un même type de réacteur, selon le constructeur. La forme des barres absorbantes doit bien entendu être adaptée à la forme des éléments combustibles et on sait qu'il existe notamment des barres absorbantes présentant une section en forme de croix et des barres se présentant sous la forme de grappes de contrôle. Dans la suite de la description, on désignera de façon générique tous ces types de barres par l'expression "barres absorbantes".

Dans le but de réduire d'une part l'encombrement en hauteur des mécanismes habituellement utilisés sur les réacteurs, et d'autre part de réduire le nombre de ceux-ci, la présente invention concerne une architecture où les dispositifs de manoeuvre de l'absorbant sont placés directement dans la cuve, seuls les organes de commande de dimensions réduites étant disposés à l'extérieur de celle-ci.

Conformément à la présente invention, il est proposé un dispositif de commande des barres absorbantes susceptibles d'être introduites dans le coeur d'un réacteur nucléaire, afin d'assurer le pilotage et l'arrêt de ce dernier, chacune des barres absorbantes comportant une tête normalement accrochée par des moyens de liaison déverrouillables à distance à un organe apte à se déplacer verticalement, sous l'action de moyens de pilotage, dans le prolongement d'un boîtier d'assemblage contenant un jeu d'éléments combustibles du coeur du réacteur, des moyens d'arrêt agissant sur les moyens de liaison afin de désolidariser l'organe de la tête de barre correspondante, lorsqu'il est nécessaire de commander la chute en sécurité de cette barre absorbante, les moyens de pilotage et les moyens d'arrêt agissant respectivement sur les organes et sur les moyens de liaison par l'intermédiaire d'un premier mécanisme de transmission et d'un deuxième mécanisme de transmission, caractérisé en ce que chacun des mécanismes de transmission comporte une partie apte à venir se placer dans un évidement correspondant s'étendant sur la hauteur de chaque barre absorbante, lorsque celle-ci est en position haute.

Grâce à ces caractéristiques, une grande partie des mécanismes qui assurent la transmission aux chariots supportant les barres des mouvements qui sont commandés par les moyens de pilotage, est logée à côté des barres absorbantes lorsque celles-ci sont en position haute. L'encombrement vertical au-dessus du coeur peut donc être réduit à un peu plus d'une hauteur de barre. En particulier, lorsque les barres absorbantes

B 7644-3 GP

sont cruciformes, lesdites parties des mécanismes de transmission viennent se placer entre les ailes des croix formées par les barres absorbantes, lorsque celles-ci sont en position haute.

Selon un autre aspect de l'invention, lesdites parties des mécanismes de transmission sont placées dans des tubes guides verticaux dans lesquels sont reçues les barres absorbantes lorsqu'elles sont en position haute, lesdits organes étant constitués par des chariots coulissant dans les tubes guides.

Les moyens de pilotage et les moyens d'arrêt peuvent être en nombre égal, chacun d'entre eux pouvant être associé selon le cas à une seule barre absorbante ou à plusieurs barres qu'ils commandent alors simultanément.

Selon deux variantes de réalisation de l'invention, la partie du premier mécanisme de transmission qui est logée à côté des barres absorbantes en position haute peut être constituée soit par une vis verticale reçue dans un écrou solidaire de l'organe correspondant, soit par deux roues dentées disposées dans le même plan vertical et par une chaîne ouverte engrenée sur les deux roues dentées et fixée par ses deux extrémités à l'organe correspondant.

De façon comparable, la partie correspondante du deuxième mécanisme de transmission peut être une tige verticale qui définit en section au moins une surface de came placée en vis-à-vis d'au moins un levier articulé sur ledit organe, afin de solliciter l'extrémité inférieure du levier dans un évidement formé dans la tête de barre, les moyens d'arrêt agissant sur ladite tige pour imprimer à celle-ci un mouvement de rotation autour de son axe vertical. L'axe de la tige peut alors être soit confondu avec celui de la barre absorbante, soit décalé par rapport à celui-ci.

4    0095417

Conformément à un perfectionnement de cette dernière variante, la tête de barre absorbante porte au moins un ergot basculant apte à venir en-dessous d'une surface de butée formée à l'extrémité inférieure de la tige, lorsque la barre est introduite entièrement dans le coeur du réacteur et lorsque la tige verticale occupe une position dans laquelle le levier est dégagé de l'évidement afin d'empêcher la remontée accidentelle de la barre, ladite surface de butée n'étant plus au-dessus dudit ergot lorsque la tige tourne d'un angle donné pour occuper la position dans laquelle le levier est sollicité dans l'évidement, sous l'action de réarmement des moyens d'arrêt.

Ladite partie du deuxième mécanisme de transmission peut aussi comprendre une tige verticale qui coopère avec des moyens de transformation de mouvement, les moyens d'arrêt agissant sur ladite tige par l'intermédiaire du deuxième mécanisme de transmission, parallèlement à son axe vertical, de façon à déplacer la tige en oblique par rapport à cet axe sous l'effet des moyens de transformation de mouvement, ladite tige étant placée en vis-à-vis d'un levier articulé sur ledit organe afin de solliciter l'extrémité inférieure du levier dans un évidement formé dans la tête de barre. Dans ce cas, des moyens élastiques agissent, de préférence, sur l'extrémité inférieure de la tige pour la solliciter verticalement vers le bas, de façon à déplacer celle-ci en oblique, en éloignement du levier, en cas de rupture de la tige.

Selon un autre aspect de l'invention, chacun des mécanismes de transmission comporte une autre partie placée dans un châssis démontable disposé à l'intérieur de la cuve du réacteur, au-dessus de la première partie de ces mécanismes.

Chacune des parties de mécanismes qui sont placées dans le châssis comprend alors, de préférence,

B 7644-3  GP

un arbre vertical au-dessus de chaque tube guide, l'extrémité inférieure de chaque arbre étant raccordée par un accouplement démontable à la première partie du mécanisme de transmission correspondant, logée dans le tube guide correspondant. Afin de permettre une mise en oeuvre aisée du châssis tout en tenant compte d'un éventuel décalage angulaire entre les parties des mécanismes de transmission logées dans le châssis et les parties de ces mécanismes logées dans les tubes guides, l'accouplement démontable peut comprendre une pièce d'entraînement sollicitée élastiquement vers le bas mais apte à s'effacer vers le haut lors de la mise en place du châssis et de la partie du mécanisme qu'il contient, lorsqu'un tel décalage angulaire existe.

Le premier mécanisme de transmission peut aussi comprendre soit des arbres de commande horizontaux traversant la bride de la cuve du réacteur, de façon à être entraînés en rotation par les moyens de pilotage qui sont alors disposés de préférence dans un espace angulaire inférieur à 180° afin de diminuer l'encombrement hors tout du réacteur, soit des arbres de commande verticaux qui traversent le couvercle de la cuve du réacteur lorsque la structure de ce dernier autorise la mise en place des moyens de pilotage au-dessus du couvercle.

Lorsque les arbres de commande sont horizontaux, ils peuvent notamment être creux, ce qui permet de réduire l'encombrement du dispositif en plaçant à l'intérieur des arbres creux les arbres de commande horizontaux du deuxième mécanisme de transmission du système de commande de chute, chacun de ces derniers arbres étant alors entraîné en rotation limitée par un moyen de commande de chute placé dans un doigt de gant et associé au moyen de pilotage commandant la rotation de l'arbre creux correspondant.

Quelle que soit l'orientation des arbres de commande, les moyens d'arrêt peuvent aussi être placés dans les doigts de gant et associés à chacun des moyens de pilotage de façon à maintenir les arbres de commande à l'encontre de moyens élastiques sollicitant ces arbres axialement dans une position correspondant au déverrouillage des moyens de liaison.

Dans une variante, les moyens de commande de chute peuvent aussi être placés directement à l'intérieur du châssis.

Toujours conformément à l'invention, des moyens sont prévus pour empêcher la remontée des barres absorbantes lorsque celles-ci ont chuté dans le coeur du réacteur après une mise en oeuvre des moyens d'arrêt.

Lorsque la tige verticale qui vient engager le levier assurant la liaison entre le chariot et la tête de barre est animée d'un mouvement de rotation lors de la mise en oeuvre des moyens d'arrêt, ces moyens pour maintenir la barre dans le coeur peuvent comprendre au moins un ergot basculant apte à venir en-dessous d'une surface de butée formée à l'extrémité inférieure de la tige lorsque la barre est introduite entièrement dans le coeur du réacteur et lorsque la tige occupe la deuxième position autorisant le pivotement du levier.

Lorsque la tige se déplace au contraire en oblique par rapport à son axe vertical lors de la mise en oeuvre des moyens d'arrêt, ce déplacement peut notamment résulter de l'articulation de la tige à l'intérieur du tube guide correspondant au moyen de deux biellettes articulées. Les moyens pour empêcher la remontée de la barre peuvent alors comprendre un ergot basculant monté sur la tête de barre et venant se placer en-dessous d'une surface formée sur la biellette

7

0095417

articulée à l'extrémité inférieure de la tige lorsque
la barre est introduite entièrement dans le coeur du
réacteur et lorsque la tige est placée en position
basse sous l'action des moyens d'arrêt.

Les moyens pour empêcher la remontée accidentelle de la barre absorbante peuvent aussi être totalement indépendants des moyens permettant de désolidariser le chariot de la tête de barre lors de la mise
en oeuvre des moyens d'arrêt. La tête de barre peut
notamment comprendre un deuxième évidement, un boîtier
étant alors disposé à l'intérieur du tube guide et
recevant de façon coulissante un pène sollicité radialement par un ressort vers l'axe du tube guide, de
façon à faire saillie dans le deuxième évidement lorsque la barre est introduite entièrement dans le coeur
du réacteur, le chariot portant en outre un doigt qui
fait saillie vers le bas, de façon à solliciter le
pène hors du deuxième évidement, lorsque le chariot
est en position basse dans le tube guide. Ces moyens
indépendants empêchent la remontée accidentelle de la
barre absorbante en cas de rupture des moyens désolidarisant le chariot.

On décrira maintenant, à titre d'exemples
non limitatifs, différents modes de réalisation de
l'invention en se référant aux dessins annexés dans
lesquels :

- la figure 1 est une vue en coupe verticale montrant
  une partie du dispositif de commande des barres absorbantes selon l'invention,

- la figure 2 est une vue en coupe horizontale selon
  la ligne II-II de la figure 1 montrant un exemple
  d'implantation du dispositif de commande selon l'invention, au-dessus du coeur du réacteur,

- la figure 3 est une vue en coupe verticale, à plus
  grande échelle montrant l'un des accouplements dé-

B 7644--3  GP

montables qui relient la partie des mécanismes située au-dessus des tubes guides dans lesquels coulissent les barres absorbantes à une autre partie de
ces mécanismes située à l'intérieur des tubes guides,

- la figure 4 est une vue en coupe verticale, à la
même échelle que la figure 3, montrant la tête de
l'une des barres absorbantes à l'intérieur de son
tube guide, et illustrant notamment un premier mode
de réalisation du mécanisme commandant le pilotage
du réacteur et un premier mode de réalisation du
mécanisme commandant la chute en sécurité des barres
absorbantes, —

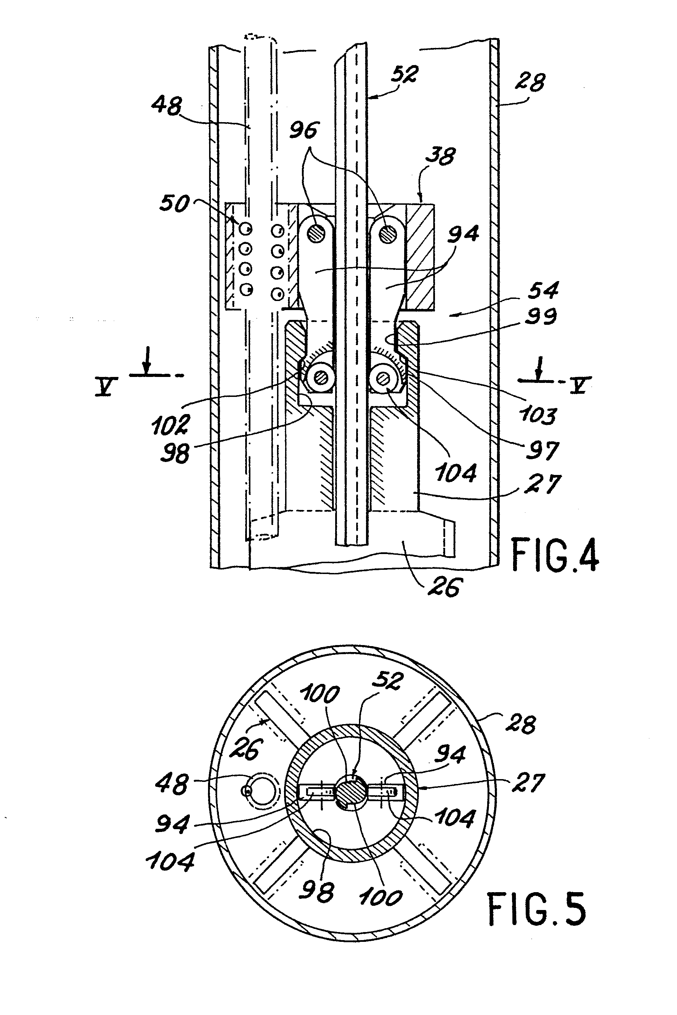

- la figure 5 est une vue en coupe selon la ligne V-V
de la figure 4,

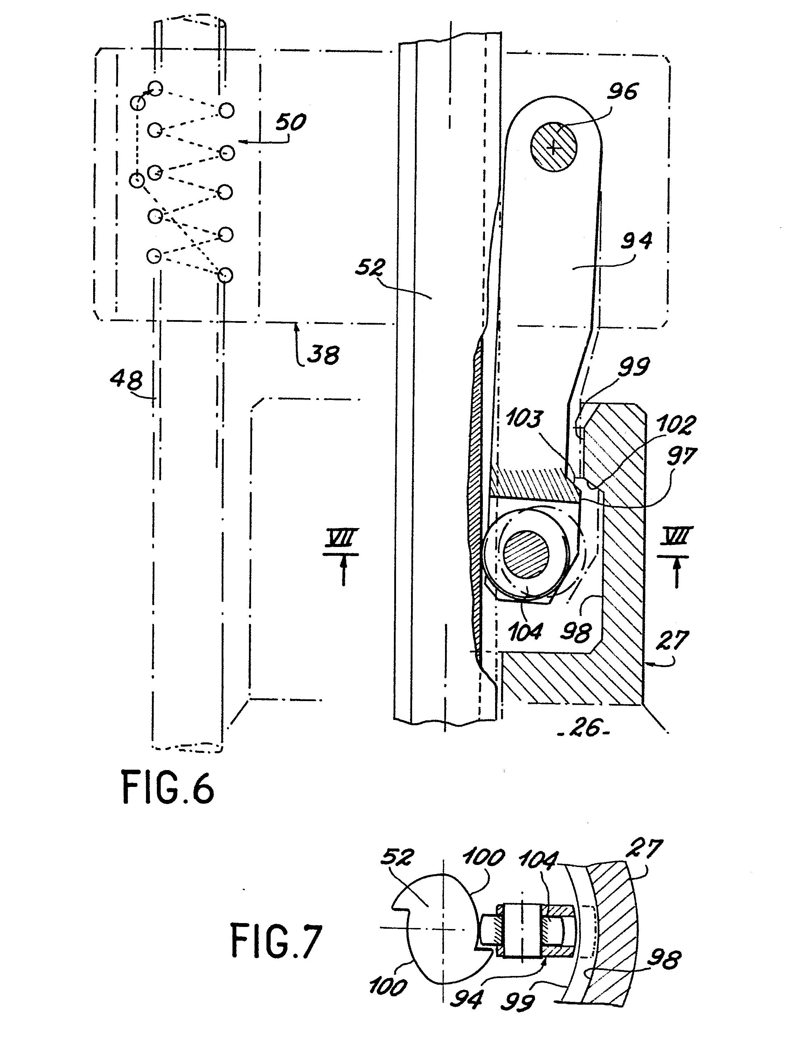

- la figure 6 montre à plus grande échelle une partie
de la figure 4 et illustre en particulier les moyens
d'accrochage de la barre et le mécanisme commandant
la chute en sécurité de celle-ci,

- la figure 7 est une vue en section selon la ligne
VII-VII de la figure 6,

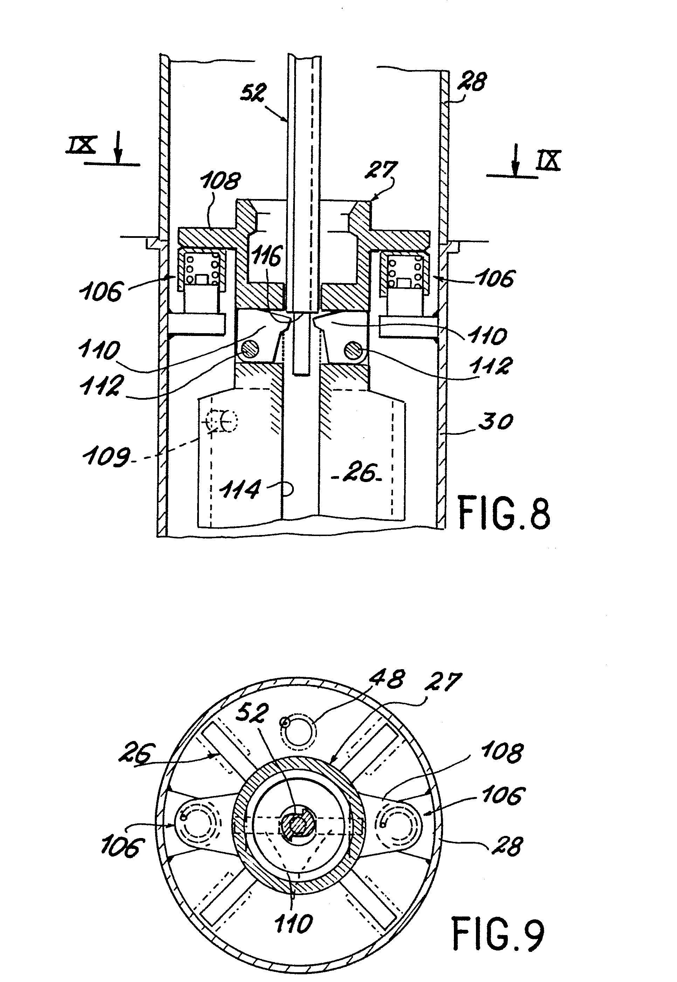

- la figure 8 est une vue en coupe verticale à la même
échelle que la figure 4 montrant la tête d'une barre
absorbante ayant chuté dans le coeur du réacteur et
illustrant notamment les moyens assurant l'amortissement en fin de chute par gravité de cette barre et
un premier mode de réalisation des moyens empêchant
la remontée accidentelle de la barre, ce mode de
réalisation étant particulièrement adapté au mode de
réalisation du mécanisme de chute en sécurité représenté sur la figure 4,

- la figure 9 est une vue en coupe selon la ligne IX-
IX de la figure 8,

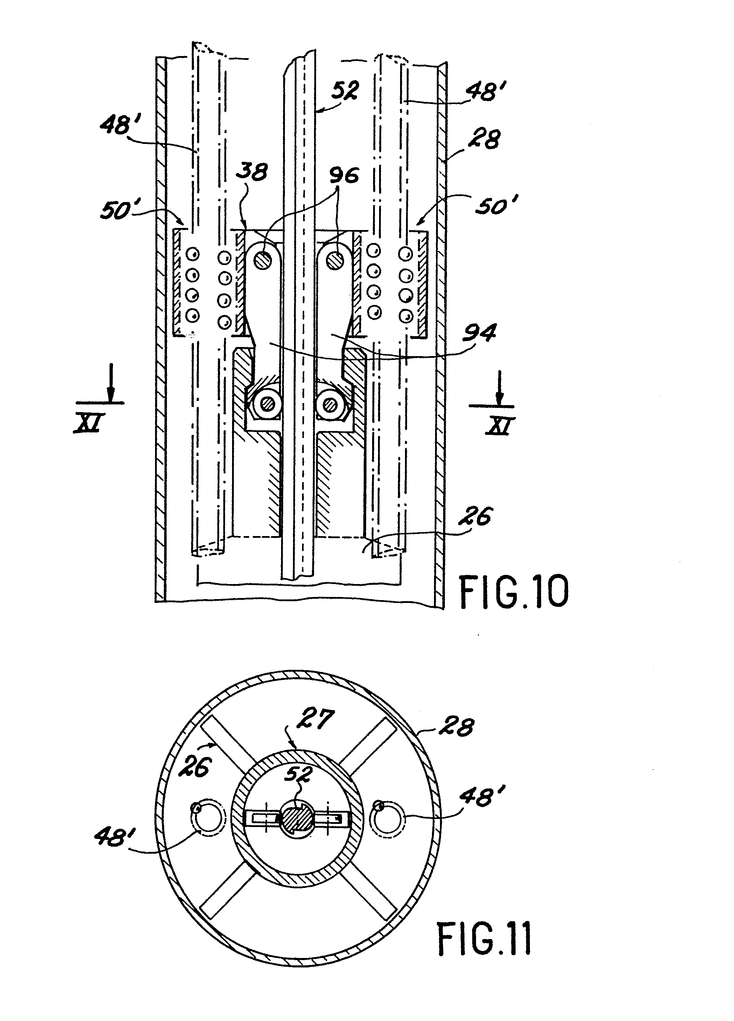

- la figure 10 est une vue en coupe comparable à la
figure 4 illustrant une variante du premier mode de
réalisation du mécanisme assurant le pilotage du
réacteur,

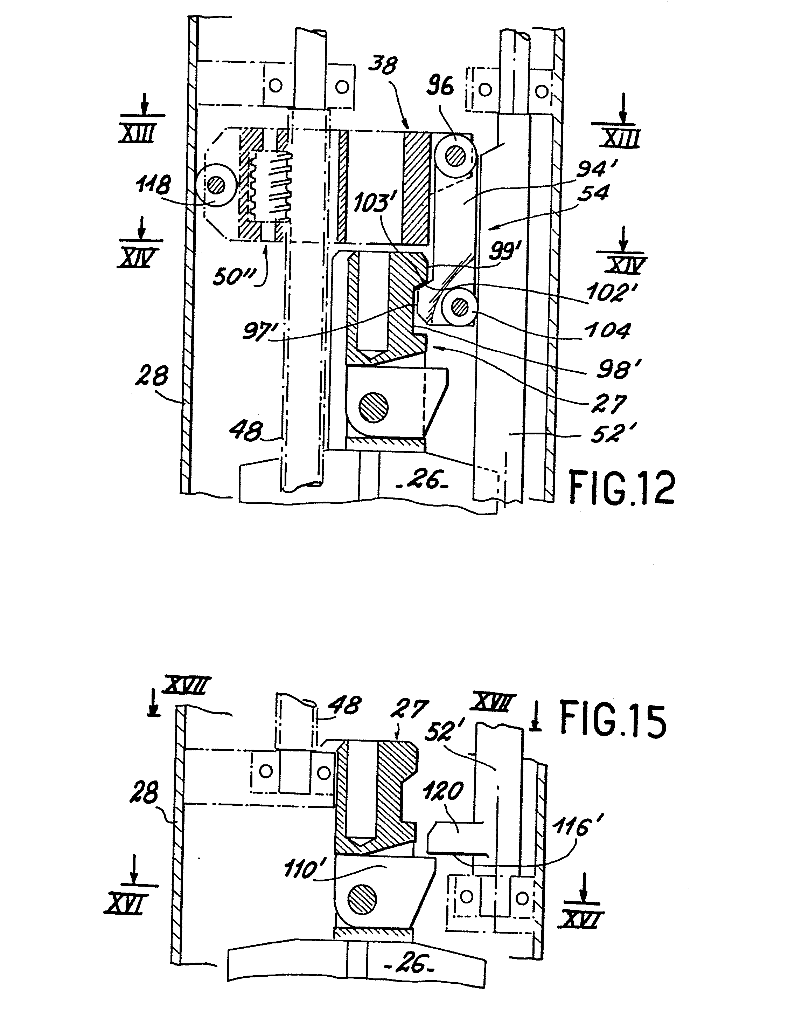

- la figure 11 est une vue en coupe selon la ligne XI-XI de la figure 10,

- la figure 12 est une vue en coupe verticale comparable à la figure 4 illustrant un deuxième mode de réalisation du mécanisme commandant le pilotage du réacteur ainsi qu'un deuxième mode de réalisation du mécanisme commandant la chute en sécurité des barres absorbantes,

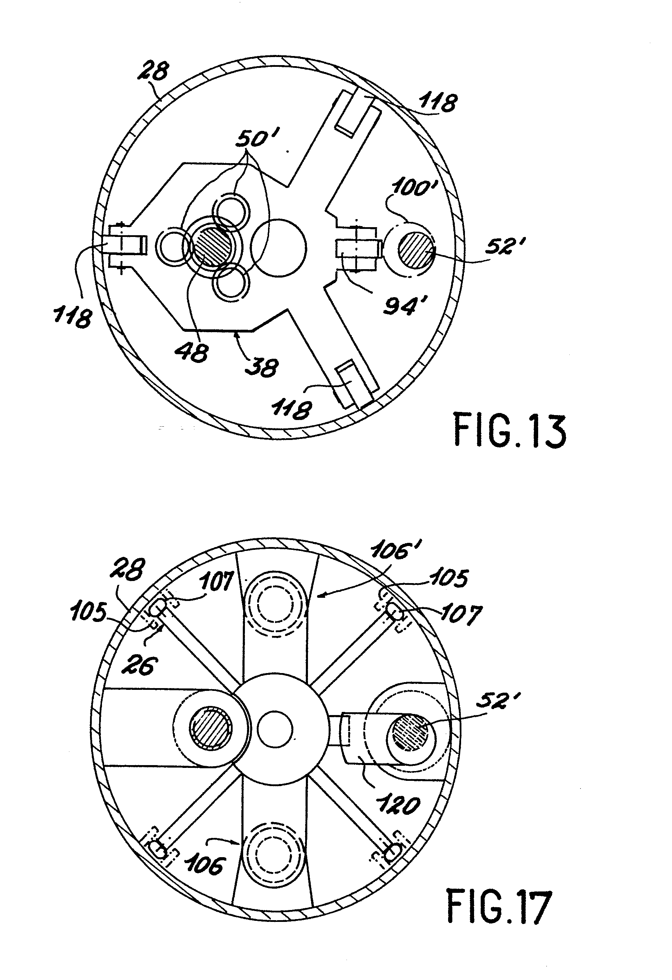

- la figure 13 est une vue en coupe selon la ligne XIII-XIII de la figure 12,

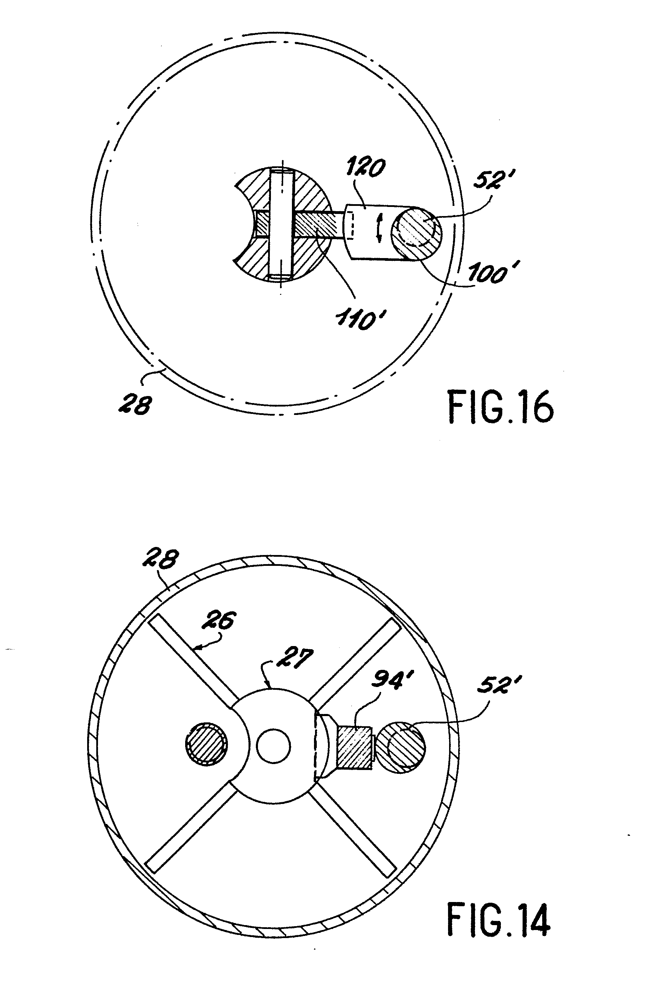

- la figure 14 est une vue en coupe selon la ligne XIV-XIV de la figure 12,

- la figure 15 est une vue en coupe verticale à la même échelle que la figure 12 représentant la tête de la barre absorbante lorsque la barre absorbante est introduite en totalité dans le coeur du réacteur et illustrant notamment un deuxième mode de réalisation des moyens pour empêcher la remontée accidentelle de la barre absorbante, ce mode de réalisation étant adapté au mode de réalisation du mécanisme de commande de chute en sécurité représenté sur la figure 12,

- la figure 16 est une vue en section selon la ligne XVI-XVI de la figure 15,

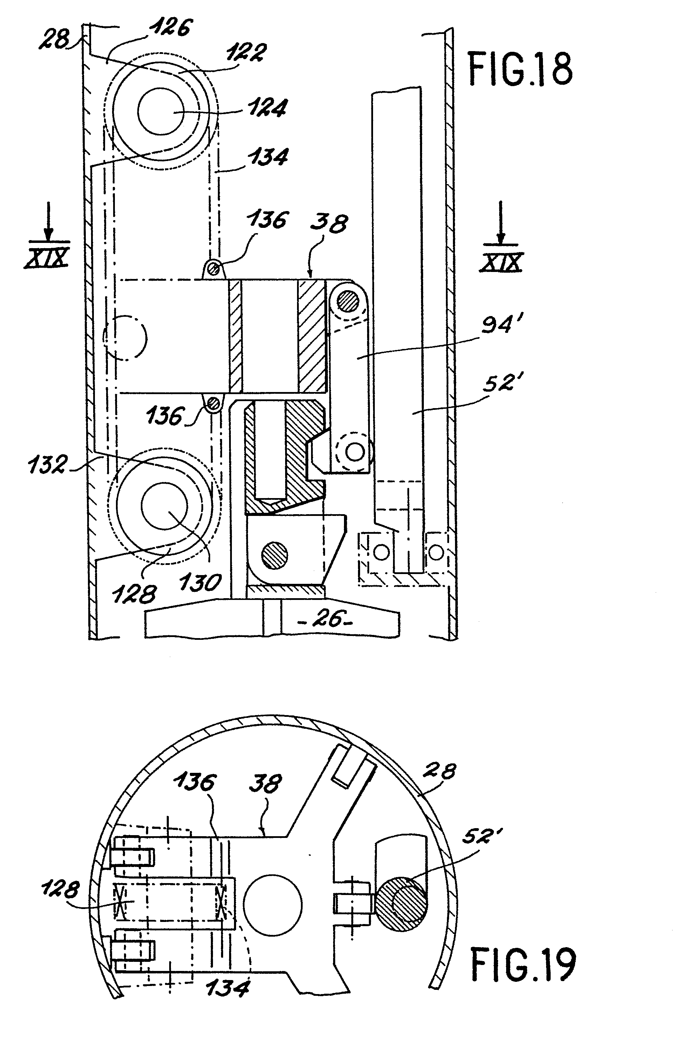

- la figure 17 est une vue en coupe selon la ligne XVII-XVII de la figure 15,

- la figure 18 est une vue en coupe verticale comparable à la figure 12 illustrant un troisième mode de réalisation du mécanisme commandant le pilotage du réacteur,

- la figure 19 est une vue en coupe selon la ligne XIX-XIX de la figure 18,

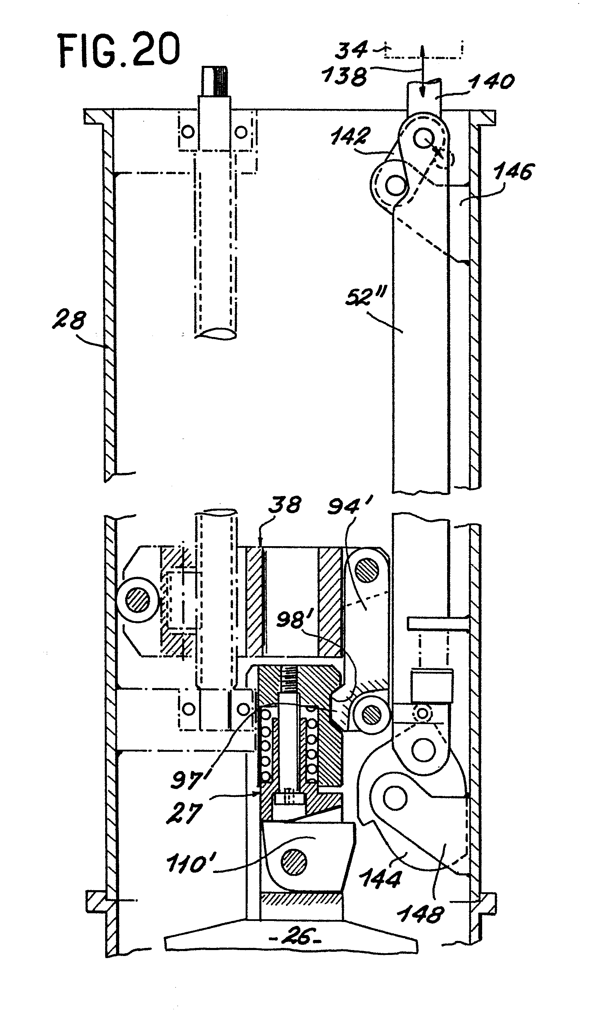

- la figure 20 est une vue en coupe verticale comparable à la figure 12, montrant les extrémités supérieure et inférieure d'un tube guide et la tête de

B7644 -3 GP

la barre absorbante correspondante lorsque cette barre est introduite en totalité dans le coeur du réacteur, cette figure illustrant notamment un troisième mode de réalisation du mécanisme commandant la chute en sécurité de la barre absorbante,

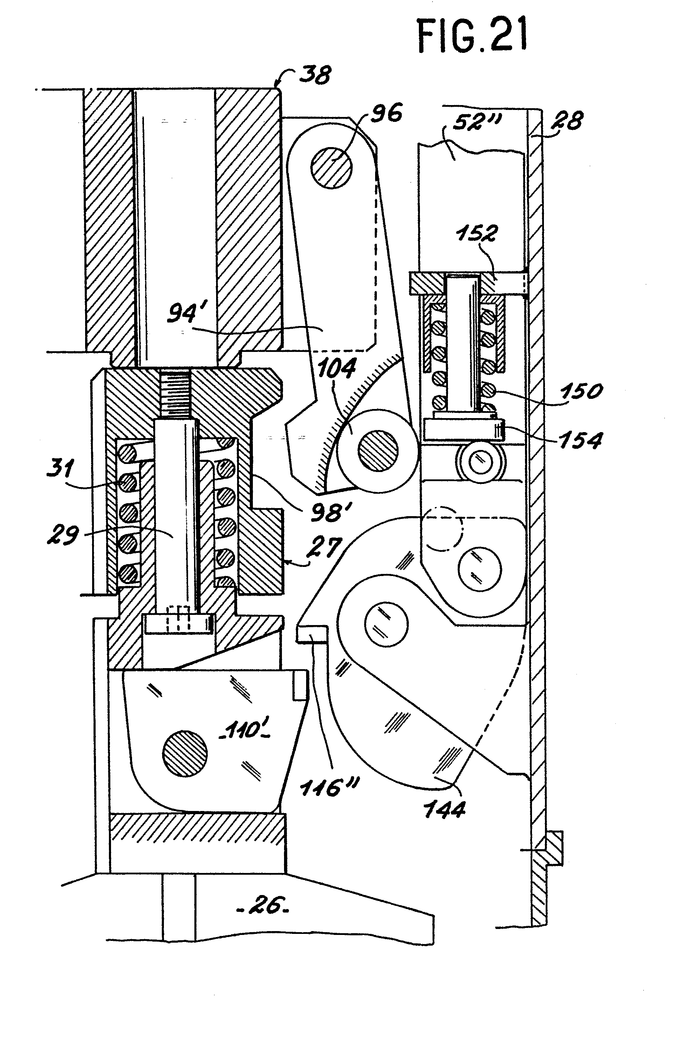

- la figure 21 est une vue à plus grande échelle d'une partie de la figure 20 montrant en particulier l'accrochage de la tête de barre et un troisième mode de réalisation des moyens empêchant la remontée de la barre absorbante, ce mode de réalisation étant adapté au mode de réalisation du mécanisme de commande de chute en sécurité représenté sur la figure 20,

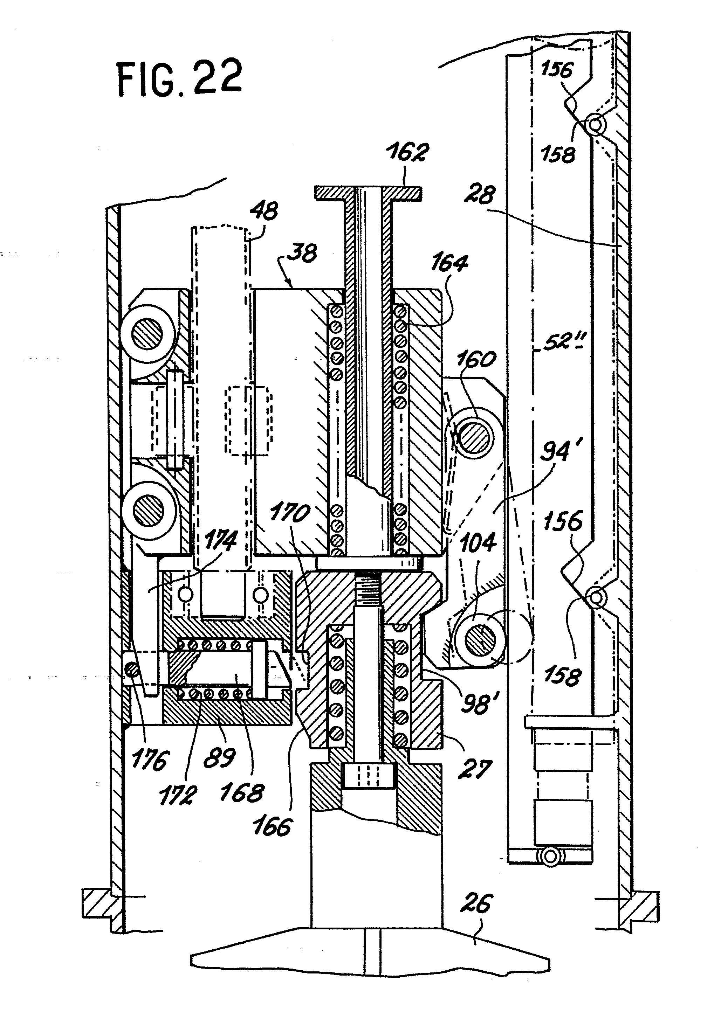

- la figure 22 est une vue en coupe verticale comparable à la figure 21 et illustrant notamment une variante du mode de réalisation du mécanisme de commande de chute en sécurité de la figure 20 et un quatrième mode de réalisation des moyens empêchant la remontée accidentelle de la barre absorbante lorsqu'elle est introduite en totalité dans le coeur du réacteur, ce mode de réalisation pouvant être utilisé quelle que soit la configuration du mécanisme contrôlant la chute en sécurité,

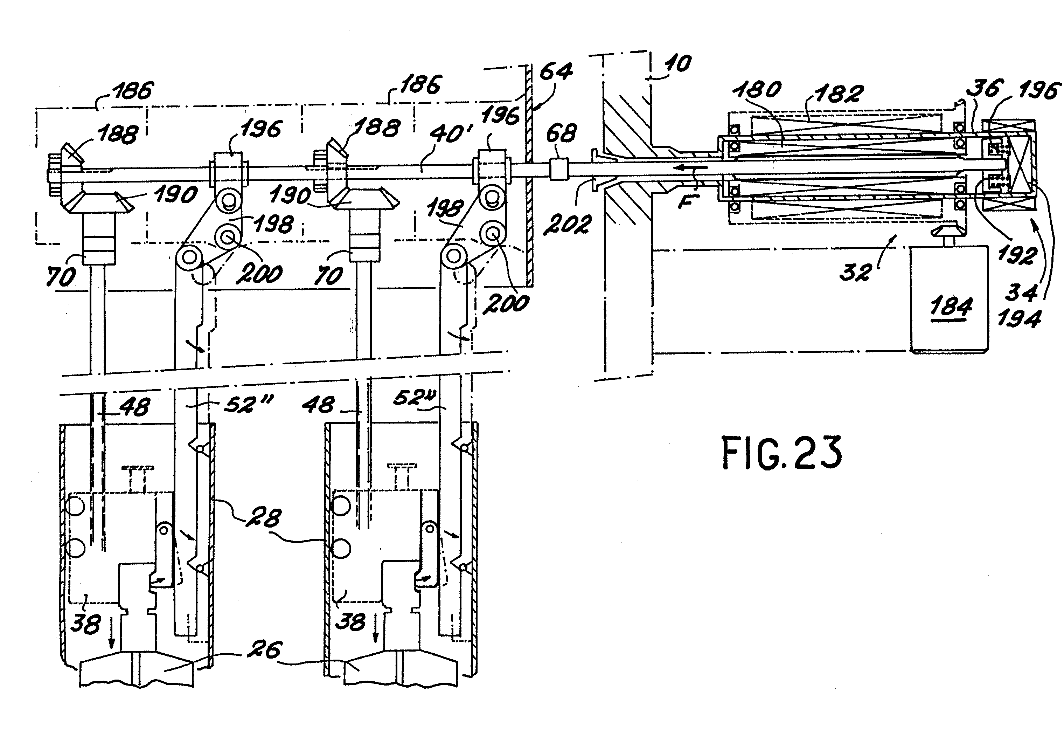

- la figure 23 est une vue en coupe verticale illustrant un autre mode de réalisation de l'invention selon lequel le pilotage et la chute en sécurité des barres absorbantes sont commandés respectivement par la rotation et par la translation d'un même arbre horizontal, et

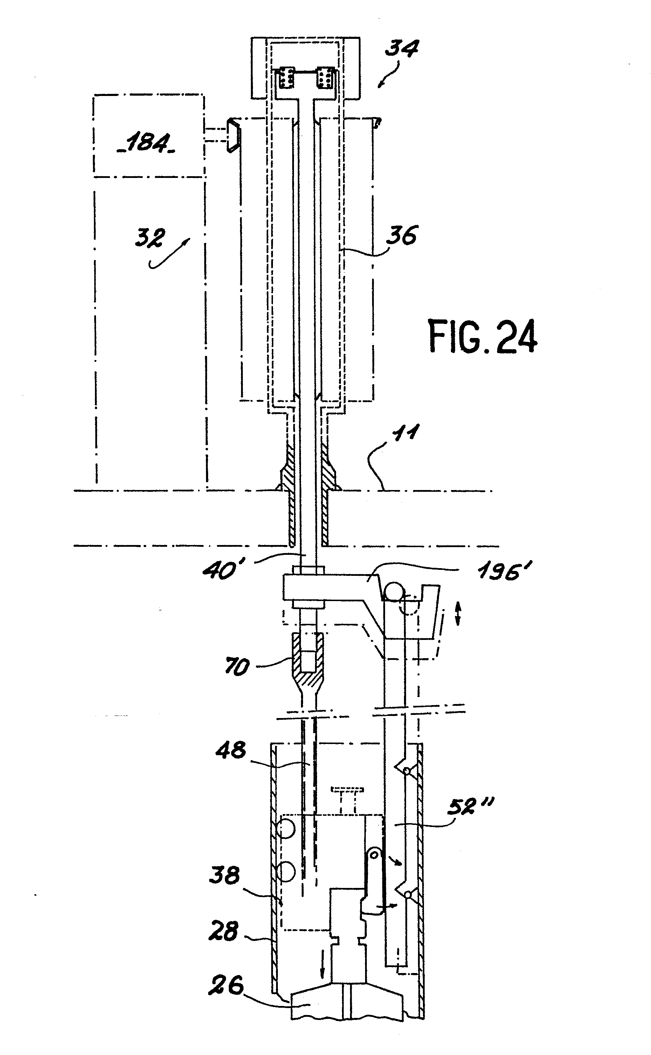

- la figure 24 est une vue comparable à la figure 23 illustrant une variante de réalisation selon laquelle les commandes du pilotage et de la chute en sécurité des barres absorbantes sont disposées au-dessus du couvercle du réacteur et agissent sur des arbres verticaux mobiles en rotation et en translation.

B 7644 -3  GP

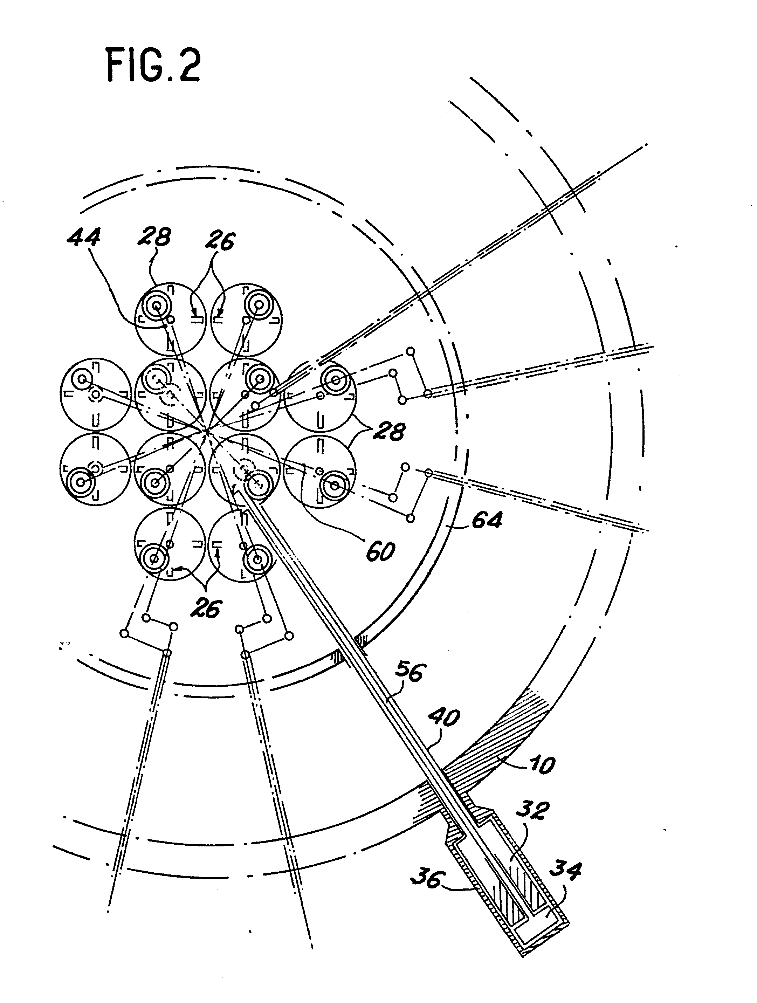

Dans le mode particulier de réalisation représenté, on voit sur la figure 2 que le dispositif selon l'invention permet de commander un certain nombre de barres absorbantes cruciformes 26 qui se présentent ici sous une forme particulière.

Ces barres de contrôle sont réparties dans le coeur selon les besoins. Chacune des barres est logée et guidée à l'intérieur d'un tube guide 28 de section circulaire et d'axe vertical, la hauteur des tubes étant sensiblement égale à celle des barres de contrôle.

Chacun des tubes guides 28 est placé de façon démontable au-dessus du coeur 14 du réacteur et dans le prolongement d'un tube vertical 30, de même diamètre, recevant les éléments ou assemblages combustibles, de section carrée, qui constituent le coeur du réacteur.

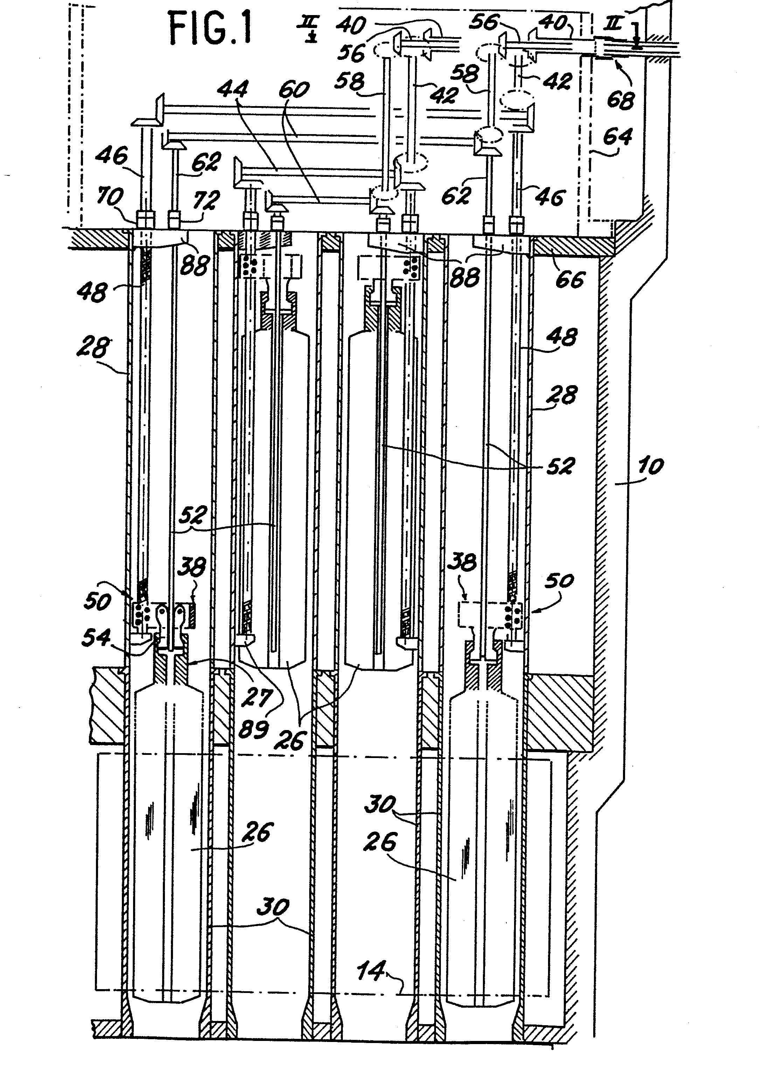

Dans la variante représentée sur les figures 1 et 2 qui va maintenant être décrite, il est prévu de piloter deux à deux les barres absorbantes selon une configuration donnée. Toutefois, on comprendra que, selon la géométrie du coeur et le nombre d'éléments combustibles utilisés, il est également possible d'imaginer une autre configuration dans laquelle chaque barre absorbante serait commandée individuellement ou au contraire dans laquelle 3 ou 4 barres absorbantes seraient commandées simultanément.

Sur la figure 2, on a représenté les parties magnétiques d'un moyen de pilotage 32 et d'un moyen d'arrêt 34 du réacteur, logées dans un boîtier unique ou doigt de gant 36 fixé de façon étanche à l'extérieur de la cuve 10 du réacteur et, plus précisément, à la bride constituant la partie supérieure de cette cuve. Dans cette disposition, à chacun des moyens de pilotage 32 est associé un moyen d'arrêt 34 et il en résulte que le nombre de chacun d'entre eux est le même. Plus précisément, chacun des moyens de pilotage 32 et des moyens d'arrêt 34 commandant simultanément deux barres absorbantes 26, chacun d'entre eux est au nombre de 8 dans la variante représentée qui comporte 16 barres absorbantes.

Les moyens de pilotage 32 sont constitués par des entraîneurs magnétiques permettant de commander à volonté, par l'intermédiaire d'un premier mécanisme de transmission, la montée et la descente d'un chariot 38 à l'intérieur de chacun des tubes guides 28. Dans le mode de réalisation représenté, ce mécanisme de transmission comprend, pour chacun des entraîneurs magnétiques 32, un arbre de commande horizontal 40 traversant de façon étanche la bride de cuve 10 pour pénétrer dans l'un des doigts de gant 36. L'extrémité de l'arbre 40 pénétrant dans le doigt de gant 36 porte la partie magnétique de l'entraîneur 32, qui est entraînée en rotation par les moyens de pilotage de cet entraîneur, placés à l'extérieur de la cuve et agissant au travers de la paroi du doigt de gant 36. L'extrémité opposée de l'arbre 40, disposée à l'intérieur de la cuve 10 et au-dessus des tubes guides 28, commande par l'intermédiaire de pignons de renvoi d'angle portés par un arbre oblique 42 et par un arbre horizontal 44, la rotation de deux arbres verticaux 46. Chacun des arbres 46 se prolonge vers le bas à l'intérieur d'un tube guide 28, sous la forme d'une vis verticale 48 dans le premier mode de réalisation représenté sur les figures 1 et 2. Comme on le verra plus en détails ultérieurement, chacune des vis 48 est reçue dans un écrou 50 solidaire du chariot 38 correspondant et commande ainsi le déplacement de ce dernier à l'intérieur du tube guide. Les extrémités inférieure et supérieure de chacune des vis 48 sont

B 7644-3 GP

montées dans des paliers logés dans des supports 88, 89 fixés à l'intérieur du tube guide correspondant.

Conformément à l'invention, la vis 48 se trouve logée entre deux ailes de la croix formée par la barre absorbante, lorsque celle-ci est en position haute.

Le moyen d'arrêt 34 qui est associé à chacun des moyens de pilotage 32 est aussi constitué par un entraîneur magnétique dans le mode de réalisation des figures 1 et 2. Toutefois, il pourrait aussi être constitué par un électro-aimant ou encore par un système hydraulique, pneumatique ou autre. Pour des raisons de sécurité évidentes, le fonctionnement dans le sens correspondant à la chute en sécurité des barres absorbantes est commandé de préférence par la disparition d'un signal qui peut être selon le cas un signal électrique, une pression hydraulique ou une pression pneumatique.

Ces moyens d'arrêt peuvent être en nombre différent des moyens de pilotage ; surtout dans ce cas, ils peuvent être situés à l'intérieur du réacteur, notamment à l'intérieur du châssis.

Les moyens d'arrêt 34 agissent par l'intermédiaire d'un deuxième mécanisme de transmission sur une pièce mobile 52 dont la position contrôle le verrouillage et le déverrouillage de moyens de liaison 54 par lesquels les têtes des barres absorbantes 26 sont suspendues au chariot 38, pour désolidariser les barres des chariots lorsqu'une chute des barres est commandée par les moyens d'arrêt 34.

Dans le mode de réalisation représenté sur les figures 1 et 2, les arbres de commande 40 sont creux et le deuxième mécanisme de transmission du système de commande de chute comprend un arbre de commande horizontal 56 disposé coaxialement à l'intérieur de chacun des arbres 40 et traversant la cuve 10 ainsi que l'entraîneur magnétique 32 correspondant, de façon à être entraîné en rotation à l'une de ses extrémités par les moyens d'arrêt 34 qui sont également logés dans les doigts de gant 36. Chaque arbre de commande 56 entraîne en rotation par son autre extrémité et par l'intermédiaire de renvois d'angle un arbre oblique 58 puis un arbre horizontal 60, ce dernier entraînant lui-même en rotation par l'intermédiaire de renvois d'angle deux arbres verticaux 62 qui se prolongent vers le bas à l'intérieur de deux tubes guides 28 sous la forme de deux des pièces mobiles 52. Ces pièces mobiles sont alors, comme on le verra ultérieurement des tiges tournantes supportées à leur extrémité supérieure par des paliers logés dans le support 88. Comme le montrent les figures 1 et 2, les moyens de pilotage 32 et les moyens d'arrêt 34 qui sont disposés dans un même doigt de gant 36 commandent de préférence le déplacement de chariots 38 et d'organes mobiles 52 situés dans les mêmes tubes guides 28.

Conformément à l'invention, les pièces mobiles 52 sont logées entre deux ailes de la croix formée par chaque barre absorbante, lorsque celle-ci est en position haute.

Conformément à une autre caractéristique intéressante du dispositif selon l'invention, une partie des mécanismes de transmission par lesquels les moyens de pilotage 32 et les moyens d'arrêt 34 agissent respectivement sur les chariots 38 et sur les organes mobiles 52, est disposée à l'intérieur d'un châssis amovible 64, de configuration générale cylindrique et d'axe vertical, qui est placé à l'intérieur de la cuve 10 du réacteur entre le couvercle obturant celle-ci et l'extrémité supérieure des tubes guides 28. De façon plus précise, on voit sur la figure 1 que le châssis 64 repose sur une plaque 66, elle-même fixée de façon amovible dans la cuve 10 du réacteur,

0095417

cette plaque 66 assurant par ailleurs le supportage des tubes guides 28 et des mécanismes contenus dans ces tubes. La hauteur du châssis 64 est faible par rapport à une hauteur de barre 26 ; elle est de toute manière nécessaire dans les meilleures réalisations antérieures connues ; ainsi l'encombrement vertical au-dessus du coeur 14 est très nettement inférieur à celui des dispositifs antérieurs connus.

Afin de permettre le démontage du châssis 64 et de la partie des mécanismes de transmission disposée à l'intérieur de ce châssis, des raccords ou manchettes démontables représentés schématiquement en 68 sont prévus sur chacun des arbres de commande coaxiaux 40 et 56 qui traversent le châssis 64. Pour la même raison, des accouplements 70 et 72 sont prévus au niveau de la plaque horizontale 66 respectivement entre les arbres verticaux 46 et les vis 48 et entre les arbres verticaux 62 et les organes mobiles 52.

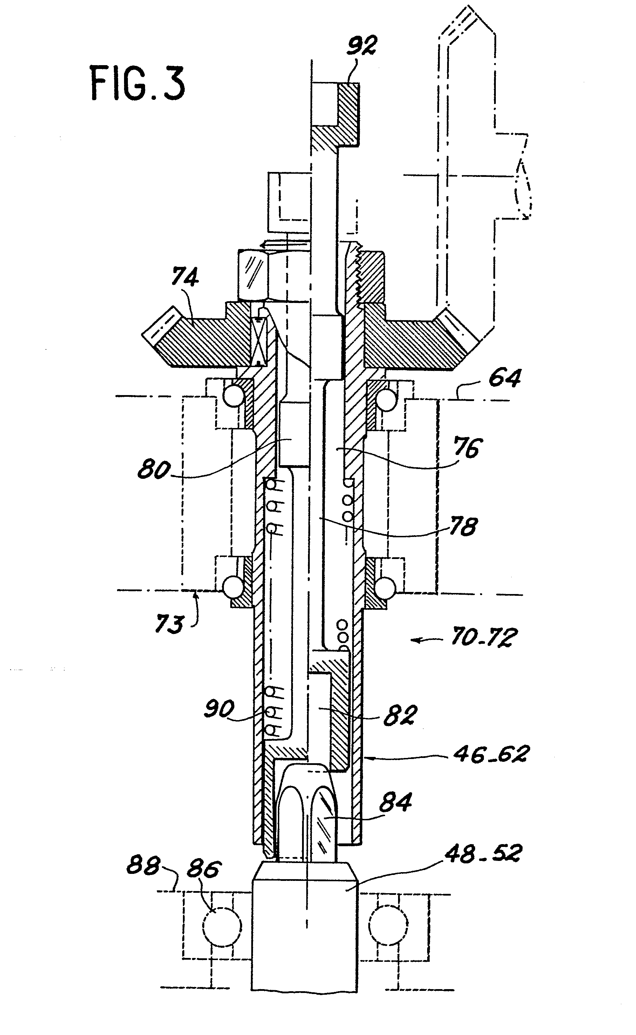

Compte tenu du fait que les mouvements à transmettre par les accouplements 70 et 72 sont des mouvements de rotation, la transmission des mouvements peut être faite au moyen de carrés d'entraînement mâles et femelles ou de tout mécanisme équivalent. Toutefois, lors de la mise en place du châssis 64 et des mécanismes qu'il contient, il est nécessaire de prévoir des moyens permettant de compenser les incertitudes de positionnement angulaire de chaque carré mâle par rapport à son carré femelle. A cet effet, on a prévu, au niveau de chacun des accouplements 70 et 72, un mécanisme particulier représenté sur la figure 3.

On voit sur la figure 3 que chacun des arbres 46 et 62 est un arbre creux qui tourne librement à l'intérieur du châssis 64 par l'intermédiaire de paliers 73. Comme on l'a déjà indiqué, un pignon conique de renvoi d'angle 74 est claveté à l'extrémité supérieure de l'arbre 46 ou 62 pour assurer son entraînement en rotation. L'intérieur de l'arbre creux 46, 62,

B 7644-3 GP

définit un carré d'entraînement femelle 76 entraînant en rotation un arbre interne 78 par l'intermédiaire d'un carré d'entraînement mâle 80. L'extrémité inférieure de l'arbre 78 est munie d'un carré d'entraînement femelle 82 constituant l'accouplement 70, 72 proprement dit avec un carré d'entraînement mâle 84 formé à l'extrémité supérieure de la vis 48 ou de l'organe mobile 52, selon le cas, cette vis ou cet organe étant reçu(e) dans un palier 86 monté dans le boîtier 88 à l'intérieur du tube guide 28 correspondant et à l'extrémité supérieure de ce tube (figure 1).

La coopération entre les carrés d'entraînement mâle 80 et femelle 76 permet à l'arbre 78 de se déplacer parallèlement à son axe sur une distance au moins égale à la hauteur du carré femelle 84, à l'encontre de la force exercée vers le bas par un ressort de compression 90, logé entre les arbres 46, 62 et 78. Enfin, un carré d'entraînement manuel 92 est prévu à l'extrémité supérieure de l'arbre 78 afin de réaliser manuellement la coïncidence des positions angulaires des carrés 82 et 84.

Le fonctionnement de l'accouplement qui vient d'être décrit en se référant à la figure 3 est simple. Lorsque le châssis 64 est présenté avec l'ensemble des mécanismes de transmission qu'il contient, il se met en place naturellement au niveau de fonctionnement, puisque les carrés d'entraînement 84 qui ne sont pas en phase angulaire avec les carrés d'entraînement 82 repoussent les arbres internes 78 correspondant à l'intérieur des arbres 46, 62. Au cours de ce mouvement, le carré mâle 80 glisse dans le carré femelle 76 de la hauteur correspondant à celle du carré mâle 24, en comprimant le ressort 90 comme on l'a représenté sur la partie droite de la figure 3.

La réalisation des accouplements entre les carrés 82 et 84 est faite manuellement au moyen d'un outillage approprié qui vient agir sur chaque carré d'entraînement manuel 92 pour faire tourner l'arbre 78 jusqu'à ce que le carré femelle 82 vienne coïncider avec le carré mâle 84. Lorsque cette coïncidence angulaire est réalisée, le ressort 90 se décomprime instantanément et pousse l'arbre 78 de telle sorte que le carré 82 vient coiffer le carré 84 correspondant, comme on l'a représenté sur la partie gauche de la figure 3.

Afin de diminuer l'encombrement radial hors tout du réacteur, l'encombrement angulaire des arbres de commande horizontaux 40 et 56 à l'intérieur de la cuve 10 du réacteur est limité de préférence à un espace angulaire inférieur à 180°, comme l'illustre la figure 2. De plus, pour des raisons pratiques, on a cherché dans le mode de réalisation représenté sur les figures 1 et 2, à disposer l'ensemble de ces arbres horizontaux dans un même plan horizontal. Toutefois, cette disposition a pour conséquence de compliquer les mécanismes disposés à l'intérieur du châssis 64 et conduit notamment à l'ajout des arbres obliques 42 et 58. Il en résulte que l'encombrement vertical du dispositif selon l'invention au-dessus du coeur du réacteur est légèrement plus important dans le mode de réalisation représenté que dans un autre mode de réalisation non représenté selon lequel tous les arbres de commande ne seraient pas disposés dans un même plan horizontal. En effet, cette variante permettrait notamment de commander directement le pilotage et l'arrêt du réacteur dans l'axe des arbres horizontaux 44 et 60, les manchettes de sortie étant décalées sur la bride de cuve dans l'axe respectif des arbres 44 et 60.

On remarquera aussi que les moyens de pilotage 32 ainsi que les moyens d'arrêt 34 ne sont pas nécessairement disposés à la périphérie de la bride supérieure de la cuve du réacteur, comme on vient de

18 0095417

le décrire. En effet, les moyens d'arrêt 34 peuvent aussi être disposés à l'intérieur du réacteur et ils sont alors logés dans le châssis 64 pour agir directement sur le ou les organes mobiles 52 qui leur correspondent. Cette disposition est particulièrement adaptée au cas particulier dans lequel le nombre des moyens d'arrêt est différent de celui des moyens de pilotage.

Dans un réacteur de type différent autorisant l'implantation de certains éléments au-dessus du couvercle de la cuve du réacteur, les moyens de pilotage 32 ainsi que les moyens d'arrêt 34 peuvent aussi être disposés directement au-dessus de couvercle et ils entraînent alors en rotation des arbres de commande verticaux 42 et 56 remplissant une fonction identique à celle des arbres de commande horizontaux 40 et 56.

On décrira maintenant, en se référant aux figures 4 à 22, différents modes de réalisation et variantes des parties de mécanismes qui sont logées dans les tubes guides afin d'assurer notamment le pilotage et l'arrêt du réacteur en déplaçant verticalement les chariots 38 et en décrochant les barres absorbantes 26 des chariots.

Ainsi, on voit sur la figure 4 l'un des chariots 38 dont le déplacement vertical à l'intérieur du tube guide 28 correspondant est commandé à l'aide d'une vis 48 reçue dans un écrou à billes 50 fixé au chariot 38. Comme le montre la figure 5, la vis 48 est décalée par rapport à l'axe du tube guide 28 et elle est disposée entre les espaces disponibles de la barre absorbante 26 lorsque celle-ci est en position haute dans le tube guide.

Les moyens de liaison 54 entre la tête 27 de la barre absorbante et le chariot 38 comprennent deux

B 7644-3 GP

leviers 94 dont les extrémités supérieures sont montées pivotantes sur le chariot 38 par deux axes horizontaux 96 parallèles entre eux. Les extrémités inférieures des leviers 94 pénètrent dans un évidement 98 formé à l'extrémité supérieure de la tête de barre 27 et présentant sur leurs bords externes des parties en saillie 97 qui pénètrent dans une partie de plus grande largeur de l'évidement 98, ce dernier présentant dans sa partie haute une partie de largeur reduite 99 qui se trouve normalement au-dessus des parties en saillie 97 des leviers 94. La tête de barre 27 est ainsi suspendue au chariot 38 lorsque les leviers 94 sont écartés l'un de l'autre, comme l'illustre la figure 4.

L'écartement des leviers 94 est obtenu au moyen de l'organe mobile 52 qui, dans le mode de réalisation de la figure 4, est constitué par une tige verticale dont l'axe est confondu avec celui du tube guide 28. La tige 52 se trouve logée dans un alésage ou passage 114 formée dans la barre absorbante lorsque celle-ci est en position haute. La tige 52 est apte à tourner sur elle-même de 90° lorsque les moyens d'arrêt correspondants 34 sont mis en oeuvre et elle définit en section deux surfaces de came 100, comme l'illustre notamment la figure 5.

On voit sur cette dernière figure que, lorsque la tige 52 occupe la position représentée, elle sollicite les leviers 94 en écartement l'un de l'autre et maintient ainsi les extrémités inférieures en saillie 97 de ces leviers en-dessous de la partie de largeur réduite 99 dans l'évidement 98 de la tête de barre 27, ce qui a pour effet d'assurer l'accrochage de la barre absorbante 26 au chariot 38.

Au contraire, lorsqu'on actionne les moyens d'arrêt correspondants pour faire tourner de 90° la

B 7644-3 GP

tige 52, on voit sur les figures 6 et 7 que la distance entre la partie de chacune des surfaces de came 100 placée en vis-à-vis de l'un des leviers 94 diminue suffisamment pour permettre aux extrémités en saillie 97 des leviers 94 de dégager la partie de plus grande largeur de l'évidement 98, ce qui a pour effet d'assurer la chute de la barre 26 correspondante dans le coeur du réacteur.

On notera que, dans les modes de réalisation représentés, les extrémités inférieures des leviers 94 sont maintenues en permanence contre les surfaces de came 100 formées sur la tige 52 par les forces de gravité résultant du poids de la barre absorbante 26. Cet effet est obtenu par suite de la coopération d'une surface tronconique 102 formée entre les parties de largeur différente de l'évidement 98 avec des rampes 103 formées au-dessus des parties en saillie 97 des leviers 94.

On voit aussi sur la figure 4 que chacune des extrémités inférieures des leviers 94 est en appui sur la surface de came 100 formée en vis-à-vis sur la tige 52 par l'intermédiaire d'une roulette 104. Ces roulettes permettent de transformer en forces de roulement les forces de frottement qui existent entre les leviers 94 et la tige 52 lorsqu'on déplace la barre absorbante 26 sous l'action des moyens de pilotage.

On voit sur les figures 8 et 9 que les boîtiers 30 des assemblages combustibles comportent, de préférence, à leur extrémité supérieure, des amortisseurs hydrauliques de fin de chute 106 qui peuvent être au nombre de 2, comme représenté, et disposés symétriquement par rapport à l'axe du boîtier. On voit que la tête 27 de la barre absorbante est pourvue à cet effet de pattes 108 qui viennent en appui sur les amortisseurs hydrauliques 106 lorsque la barre 26 ar-

B 7644-3 GP

rive en fin de course dans le coeur. Afin d'assurer un guidage efficace de la barre dans son tube guide, elle peut être munie d'un ou plusieurs galets de roulement 109.

On voit aussi sur les figures 8 et 9 que la tête de barre 27 porte deux ergots basculants 110 disposés symétriquement par rapport à l'axe commun au tube guide et à la tige 52. Ces ergots sont articulés autour de deux axes horizontaux et parallèles 112. Les extrémités des ergots 110 font saillie à l'intérieur du passage 114 qui est ménagé dans la barre absorbante 26 pour permettre le passage de la tige 52. De façon plus précise, les ergots 110 sont décalés de 90° par rapport aux leviers 94, comme le fait apparaître la comparaison des figures 5 et 9. Les extrémités des ergots 110 sont donc normalement en vis-à-vis des parties des surfaces de came 100 de plus petit débordement radial de la tige 52, lorsque cette tige occupe la position représentée sur les figures 4 et 5 assurant l'accrochage de la barre absorbante sur son chariot. Les extrémités des ergots 110 sont même alors légèrement espacées des parties des surfaces de came 100 de plus petit débordement, de façon à éviter tout frottement lors du déplacement de la barre absorbante sous l'action des moyens de pilotage. Au contraire, lorsque la tige 52 tourne de 90°, commandant ainsi comme on l'a vu la chute de la barre absorbante, les ergots 110 se trouvent en vis-à-vis des parties des surfaces de came 100 de plus grand débordement radial de la tige 52, de telle sorte qu'ils viennent se placer en-dessous d'une surface de butée 116 formée à proximité de l'extrémité inférieure de la tige 52, lorsque la barre 26 a chuté dans le coeur, comme l'illustre la figure 8. Toute remontée de la barre 26 résultant d'une dépressurisation accidentelle est ainsi empêchée.

Sur les figures 10 et 11, on a représenté une variante du mode de réalisation de la figure 4 selon laquelle le mécanisme de pilotage disposé à l'intérieur de chacun des tubes guides 28 n'est plus constitué par une seule vis verticale coopérant avec un écrou mais par deux vis verticales 48' coopérant avec deux écrous 50', les vis et les écrous étant disposés symétriquement par rapport à l'axe du tube guide. Par rapport au mode de réalisation de la figure 4, cette variante présente l'avantage de supprimer le porte-à-faux dû au décalage entre l'axe de la vis 48 et l'axe du tube guide. Toutefois, cette solution est plus complexe puisqu'elle oblige à entraîner simultanément deux vis en rotation au lieu d'une et le porte-à-faux du mode de réalisation de la figure 4 est suffisamment faible pour pouvoir être accepté lorsque le chariot 38 et la barre 26 sont convenablement guidés dans le tube 28. Le dispositif représenté est par ailleurs identique à celui de la figure 4.

Dans les réalisations de l'invention décrites jusqu'à présent, il est indispensable de ménager un passage 114 dans la barre absorbante , ceci conduit dans la pratique à renforcer la partie centrale de la barre absorbante, aux dépens du volume de combustible. Les solutions décrites ci-après permettent de pallier cet inconvénient.

Dans le mode de réalisation de la figure 12, on a remplacé l'écrou à billes 50 du système vis-écrou de la figure 4 par un écrou à galets 50" venant s'engréner sur la vis 48. De plus, les moyens de liaison 54 entre le chariot 38 et la tête de barre 27 ne comprennent plus qu'un seul levier 94' dont l'extrémité inférieure présente sur son bord interne une partie en saillie 97' qui vient s'engager dans un évidement 98' formé sur la côté de la tête de barre 27, en-dessous d'une partie en saillie 99', lorsque le levier 94' pivotant autour de son axe 56 est sollicité vers l'axe du tube guide par un organe mobile 52'. Comme dans le mode de réalisation de la figure 4, lorsqu'il en est ainsi, la coopération de l'extrémité en saillie 97' du levier pivotant 94' avec l'évidement 98' est telle que la barre absorbante 26 est accrochée au chariot 38. Au-dessus de l'extrémité inférieure en saillie du levier 94' est également formée une rampe 103' qui coopère avec une rampe 102' formée entre l'évidement 98' et la partie en saillie 99'. Les rampes 102' et 103' coopèrent entre elles pour solliciter l'extrémité inférieure du levier 94 contre l'organe mobile 52' sous l'action des forces de gravité résultant du poids de la barre absorbante 26. Le pivotement de l'organe 52', qui est constitué comme dans le mode de réalisation de la figure 4 par une tige verticale apte à tourner autour de son axe propre, a donc pour effet d'assurer la chute de la barre absorbante 26.

Comme le montre la figure 13, en raison de l'utilisation d'un seul levier 94' pour assurer la liaison entre le chariot 38 et la barre absorbante 26, la tige 52' présente une seule surface de came 100', de telle sorte qu'elle constitue en fait un excentrique. De plus, la tige 52' est décalée axialement par rapport au tube guide 28 et elle est située entre les espaces libres formés par la barre absorbante 26, comme le montre notamment la figure 17. Comme dans le mode de réalisation précédent, l'extrémité inférieure du levier 94' porte une roulette 104 par laquelle elle est en appui contre la tige 52'.

Le guidage du chariot 38 lors de son déplacement vertical est réalisé par le tube guide 28. A cet effet, on voit sur la figure 13 que le chariot 38 peut être muni, par exemple, de trois roulettes 118.

B 7644-3 GP

Le guidage de la barre absorbante est réalisé dans le tube 28. La barre absorbante, sur la figure 15, est une croix dont les ailes sont guidées dans des glissières 105, en tôle mince, ménagées dans le tube-guide 28. Chacune de ces ailes possède à deux niveaux des molettes de guidage 107 afin de rouler sans frotter lors de la manoeuvre de pilotage et de la chute.

Sur les figures 15 à 17, on a représenté en particulier les moyens permettant, dans le mode de réalisation qui vient d'être décrit en se référant aux figures 12 à 14, d'empêcher la remontée accidentelle de la barre absorbante 26 lorsque celle-ci a chuté dans le coeur du réacteur. Compte tenu de la disposition de l'arbre tournant 52', on utilise un seul ergot basculant 110' qui est monté dans la tête de barre 27 et fait saillie vers la tige 52' par rapport à cette dernière. Lorsque la tige 52' occupe la position représentée sur les figures 13 à 15, dans laquelle cette tige assure la liaison entre le chariot 38 et la barre absorbante 26, l'extrémité en saillie de l'ergot basculant 110' se trouve éloignée de la tige. En revanche, lorsque cette tige tourne de 90° afin de commander le décrochage de la barre absorbante 26, la partie en saillie de l'ergot 110' se trouve placée en-dessous d'une surface de butée 116' formée sur un doigt 120 disposé à la partie inférieure de la tige 52' après que la barre ait chuté dans le coeur du réacteur (figure 15). Lors de la chute de la barre 26, l'ergot 110' est conçu de telle manière qu'il doit basculer pour franchir la surface de butée 116'.

La figure 17 montre que dans ce mode de réalisation, il est aussi possible de prévoir des amortisseurs hydrauliques de fin de chute 106' à la partie supérieure des boîtiers 30 des assemblages combustibles.

B 7644-3 GP

On a représenté sur les figures 18 et 19 un autre mode de réalisation de la partie du mécanisme de pilotage placée à l'intérieur des tubes guides 28. Ce mécanisme comprend, dans la partie supérieure du tube guide 28, une roue crantée 122 dont l'axe horizontal 124 est porté par un support 126, fixé dans le tube guide 28. La roue crantée 122 peut être entraînée en rotation par le mécanisme décrit précédemment, par l'intermédiaire de pignons de renvoi d'angle (non représentés). Une deuxième roue crantée 128 est disposée dans le même plan que la première, à la partie inférieure du tube guide 28, et montée sur un axe 130 porté par un support 132 fixé dans le tube guide 28. Les deux roues crantées 122 et 128 reçoivent une chaîne métallique d'entraînement ouverte 134 dont les deux extrémités sont fixées au chariot 38 par des attaches 136. La chaîne 134 peut notamment être constituée d'éléments empilés sur un ruban métallique, sur un fil d'acier rond ou tout équivalent, ce qui permet de supprimer les axes et donc les forces de frottement. Les autres parties du dispositif représenté sur les figures 18 et 19 sont par ailleurs identiques à celles qui ont été décrites en se référant aux figures 12 à 17.

Sur les figures 20 et 21, on a représenté un autre mode de réalisation de l'organe mobile assurant normalement le blocage de la liaison entre le chariot 38 et l'élément absorbant 26 et assurant la chute en sécurité de ce dernier lors d'une mise en oeuvre des moyens d'arrêt correspondants. Les moyens de liaison sont par ailleurs identiques à ceux qui ont été décrits précédemment en se référant à la figure 12, c'est-à-dire qu'ils comprennent un seul levier 94' monté pivotant par son extrémité supérieure sur le chariot 38 et dont l'extrémité inférieure présente un

B 7644 -3 GP

bord interne 97' qui fait saillie dans un évidement 98' de la tête de barre 27.

Comme l'illustre tout d'abord la flèche 138 sur la figure 20 cette solution diffère des précédentes par le fait que sa commande s'effectue en imprimant à une tige verticale 140 un mouvement de translation rectiligne parallèment à son axe au lieu d'un mouvement de rotation. Si l'on utilise les mécanismes décrits par ailleurs en se référant aux figures 1 et 2, il est donc nécessaire de prévoir des moyens pour transformer le mouvement de rotation initial en un mouvement de translation. Il paraît cependant plus simple d'utiliser un moyen d'arrêt 34 produisant immédiatement un mouvement de translation et il paraît alors particulièrement avantageux d'utiliser la solution déjà mentionnée qui consiste à placer les moyens d'arrêt 34 directement à l'intérieur du châssis 64 et à utiliser pour cette fonction des commandes électromagnétiques, hydrauliques, pneumatiques ou autres, sensibles à la disparition d'un signal pour assurer la chute des barres 26 correspondantes.

Comme le montre la figure 20, l'extrémité inférieure de la tige 140 est articulée sur l'extrémité supérieure d'une tige 52" qui constitue l'organe mobile agissant sur le levier 94'. La tige 52" est disposée verticalement à l'intérieur du tube guide 28 et elle est reliée à ce dernier par un mécanisme transformant le mouvement de translation qui lui est imparti par la tige 140 en un mouvement linéaire oblique. De façon plus précise, la tige 52" est articulée à son extrémité supérieure sur une biellette 142 et à son extrémité inférieure sur une biellette 144. Ces biellettes sont elles-mêmes articulées sur des supports 146, 148 fixés dans les tubes guides 28. Les biellettes 142 et 144 sont parallèles entre elles et présentent la même longueur entre axes, de telle sorte qu'elles permettent à la tige 52" de rester constamment verticale. En outre, l'inclinaison des biellettes est telle que la tige s'éloigne du levier 94' lorsqu'elle est soumise à une force tendant à la déplacer vers le bas. Le déplacement qui en résulte est calculé de façon à permettre à l'extrémité inférieure en saillie du levier 94' de sortir de l'évidement 98' afin d'assurer la chute en sécurité de la barre absorbante 26. Il est à noter que ce déplacement peut être obtenu par un déplacement de quelques millimètres de la tige 140.

Comme l'illustre en particulier la figure 21, un ressort de compression 150, d'axe vertical, est disposé entre une plaque 152 fixée à l'intérieur du tube guide 28 et une plaque 154 fixée à la tige 52", légèrement au-dessus de son axe d'articulation sur la biellette inférieure 144, de façon à solliciter cette partie inférieure de la tige 52" vers le bas. Ce ressort 150 est destiné, en cas de rupture de la tige 52", à commander automatiquement la chute en sécurité de la barre absorbante 26 quelle que soit la position du moyen d'arrêt correspondant. En effet, on voit que ce ressort 150 amène la partie inférieure de la tige supposée cassée 52" dans la position représentée sur la figure 21, dans laquelle le levier 94' peut s'écarter de l'évidement 98' pour commander la chute de la barre.

On voit aussi sur la figure 21 que les moyens pour empêcher la remontée de la barre absorbante après sa chute en sécurité dans le coeur du réacteur comprennent, comme dans le mode de réalisation des figures 12 à 17, un ergot pivotant 110' monté sur la tête de barre 27 et dont l'extrémité fait saillie par rapport à celle-ci. Lorsque la chute en sécurité a été commandée soit par les moyens d'arrêt, soit sous l'action du ressort 150, une surface 116" formée sur la biellette 144 vient se placer au-dessus de la partie de l'ergot pivotant 110' qui fait saillie hors de la tête de barre 27, de façon à empêcher toute remontée accidentelle de la barre absorbante 26.

Enfin, on a représenté sur les figures 20 et 21 une variante de la tête de barre 27 dans laquelle cette tête est réalisée en deux parties reliées entre elles par une tige 29 et sollicitées en éloignement l'une de l'autre par un ressort de compression 31.

Cette disposition permet de réaliser une butée élastique entre le chariot 38 et la tête de barre 27 lors de l'opération de réaccrochage de celle-ci après une chute en sécurité, et de faciliter ainsi la procédure de réaccrochage de la boîte absorbante.

On a représenté sur la figure 22 une variante du mode de réalisation des figures 20 et 21 du mécanisme d'arrêt disposé dans chacun des tubes guides 28. Cette variante consiste à remplacer la liaison par biellettes entre la tige verticale 52" et le tube guide 28 par une autre liaison assurant également la transformation du mouvement de translation verticale en un mouvement linéaire oblique. A cet effet, on voit que la tige 52" est munie à proximité de chacune de ses extrémités d'une encoche en forme de V 156 dont la partie inférieure forme un plan incliné sur lequel vient rouler une roulette 158 montée de façon tournante à l'intérieur du tube guide. Le fonctionnement du mécanisme est par ailleurs semblable à celui du mécanisme décrit en se référant aux figures 20 et 21.

Le guidage de la tige 52" s'effectue dans un fourreau (non représenté) ménagé dans le tube guide 28. Cette tige possède des galets afin de supprimer les forces de frottement.

B 7644-3 GP

On voit en outre sur la figure 22 que la chute de la barre absorbante 26 peut être accélérée par différents moyens. On a tout d'abord représenté de façon schématique un ressort 160 tendant à écarter l'extrémité en saillie du levier 94' de l'évidement 98'. On a également représenté une tige verticale 162 coulissant dans le chariot 38 pour venir en appui par son extrémité inférieure sur la tête de barre 27. Cette tige 162 est sollicitée vers le bas par un ressort 164 normalement comprimé lorsque la barre absorbante est accrochée au chariot ; ce ressort 164 imprime une accélération initiale à la barre 26 par l'intermédiaire de la tige 162 lors d'une chute en sécurité.

Enfin, on a représenté sur la figure 22 une variante des moyens pour empêcher la remontée accidentelle de la barre absorbante 26 lorsque celle-ci a chuté dans le coeur du réacteur. Il est à noter que cette variante peut être utilisée quel que soit le mécanisme d'arrêt puisqu'elle est indépendante de la configuration de l'organe mobile. Dans cette solution, un boîtier est monté dans le tube guide 28 à proximité de son extrémité inférieure. Ce boîtier peut être ménagé dans le support 89 dans lequel est logé le roulement supportant l'extrémité inférieure de la vis 48. Le support 89 reçoit de façon coulissante un pène 168 qui est disposé radialement de façon à pouvoir faire saillie hors du support 89 par son extrémité la plus proche de l'axe du tube guide. Le pène 168 pénètre dans un évidement 170 formé dans la tête de barre 27, sous l'impulsion d'un ressort de compression 172, lorsque la barre a chuté dans le coeur du réacteur. L'extrémité du pène 168 est biseautée, ainsi qu'une surface 166 de la tête de barre 27, de façon à permettre la chute de la barre absorbante en totalité dans le coeur lorsque le pène fait saillie hors du support 89. Afin de permettre la remontée de la barre absorbante à l'aide des moyens de pilotage, un doigt ou une fourchette 174 fait saillie à la partie inférieure du chariot 38 et coopère avec un ergot 176 du pène 168 de façon à effacer celui-ci à l'intérieur du support 89 pour dégager son extrémité de l'évidement 170 lorsque le chariot 38 est en position basse.

Il est à noter qu'un système identique à celui qui vient d'être décrit peut aussi être disposé à la partie supérieure de chacun des boîtiers 30 des éléments combustibles afin que les barres absorbantes soient parfaitement verrouillées dans le coeur lors d'un démontage de l'ensemble du dispositif de commande des barres. Un tel système pourrait être logé dans le support des amortisseurs hydrauliques, à la partie supérieure du coeur. A cet effet, un deuxième doigt du type du doigt 174 peut être prévu sur chacun des chariots 38.

On a représenté sur la figure 23 un autre mode de réalisation de l'invention particulièrement adapté, bien que non limité, au cas où les barres absorbantes sont pilotées et suspendues de la manière qui vient d'être décrite en se référant à la figure 22. Ce mode de réalisation se distingue principalement de celui qui a été décrit précédemment en se référant aux figures 1 et 2 par le fait que les arbres horizontaux concentriques dont les rotations respectives servent à commander le pilotage et la chute en sécurité d'une ou plusieurs barres absorbantes sont remplacés par un arbre unique dont la rotation sert à commander le pilotage d'une ou plusieurs barres et dont la translation sert à commander la chute en sécurité de ces barres.

De façon plus précise, on reconnaît sur la figure 23 la partie supérieure ou bride de la cuve 10 du réacteur. Comme dans le mode de réalisation des figures 1 et 2, cette partie de la cuve comporte sur sa face externe des doigts de gant 36 dont le volume interne communique avec l'intérieur de la cuve tout en étant isolé de l'extérieur. A chaque doigt de gant 36 sont associés des moyens 32 pour commander le pilotage des barres absorbantes correspondantes et des moyens 34 pour commander l'arrêt du réacteur par la chute en sécurité des barres.

On a représenté sur la figure 23 un ensemble servant à commander simultanément deux barres 26. On comprendra qu'un ensemble du même type peut servir à commander un nombre différent de barres absorbantes et que le dispositif comporte plusieurs ensembles tels que représenté pour commander l'ensemble des barres du réacteur.

La transmission aux tiges filetées verticales 48 servant au pilotage des barres 26 et aux tiges verticales 52" servant à commander la chute en sécurité des barres absorbantes des mouvements impartis aux moyens de pilotage 32 et aux moyens d'arrêt 34 est réalisée au moyen d'un arbre horizontal unique 40'. Cet arbre 40' est disposé radialement par rapport à la bride de cuve 10 et son extrémité logée dans le doigt de gant 36 est munie de cannelures (non représentées) coopérant avec des cannelures formées dans une pièce 180 montée tournante dans le doigt de gant, de sorte qu'une rotation de la pièce 180 entraîne la rotation de l'arbre 40' et que celui-ci puisse se déplacer librement selon son axe. De préférence, des billes sont disposées entre les cannelures de l'arbre 40' et de la pièce 180, afin de réduire les frottements lors d'un déplacement axial relatif entre ces deux pièces.

L'entraînement en rotation de la pièce 180 est réalisé au travers de la paroi du doigt de gant 36

B 7644-3 GP

par un entraîneur magnétique 182 commandé par un moteur électrique 184. Le moteur 184, l'entraîneur 182 et la pièce 180 constituent ainsi les moyens de pilotage 32.

La transmission du mouvement de rotation de l'arbre 40' aux tiges filetées 48 commandant la montée ou la descente des chariots 38 auxquels sont accrochées les barres absorbantes 26, est réalisée au moyen de boîtes de renvoi d'angle 186 contenant chacune deux pignons coniques 188 et 190.

Compte tenu de la possibilité déjà mentionnée d'un déplacement axial de l'arbre 40', les pignons 188 doivent être immobilisés en translation dans les boîtes 186 afin de rester engrenés avec les pignons 190. De plus, l'entraînement des pignons 188 par l'arbre 40' est réalisé au moyen de cannelures, de préférence par l'intermédiaire de billes (non représentées) afin de réduire le frottement lors des translations de l'arbre 40'.

Pour réaliser deux à deux la commande de toutes les barres absorbantes 26 à l'aide de mécanismes tels que représentés sur la figure 23, les manchettes des doigts de gant 36 sont implantées avec un décalage vertical sur la bride de cuve afin d'éviter l'interférence au croisement des arbres horizontaux 40' à l'intérieur de la cuve.

A son extrémité située dans le doigt de gant 36, l'arbre 40' porte une pièce 192 montée sur roulements à billes, afin de permettre la rotation de l'arbre dans ladite pièce. Cette pièce 192 est attirée par un électroaimant statique 194 à l'encontre de ressorts 196 de sorte que, lorsque l'électroaimant cesse d'être excité, l'arbre 40' effectue un mouvement linéaire dans le sens de la flèche F sur la figure 23. L'électroaimant 194, la pièce 192 et les ressorts 196 constituent ainsi les moyens d'arrêt 34.

B 7644-3 GP

La transmission du mouvement de translation de l'arbre 40' aux tiges verticales 52" commandant la chute en sécurité des barres absorbantes 26 est réalisée au moyen d'une première pièce 196 solidarisée en translation de l'arbre 40' et dans laquelle ce dernier peut tourner librement, et d'une deuxième pièce 198 pivotant autour d'un axe horizontal fixe 200 lors du déplacement axial de la pièce 196 avec l'arbre 40'. Comme l'illustre la figure 23, chacune des tiges verticales 52" est articulée sur l'une des pièces 198, de sorte que le pivotement de celle-ci autour de son axe 200 résultant du déplacement de l'arbre 40' dans le sens de la flèche F a pour effet de décrocher la barre 26 de son chariot 38, comme on l'a expliqué précédemment en se référant à la figure 22.

Bien entendu, on peut envisager différentes variantes de ce mécanisme. Ainsi, la pièce 144 pourrait présenter la forme d'un étrier chevauchant l'arbre 40' et actionnant simultanément deux tiges 52" placées diamétralement dans le tube guide 28. Il est également facile de réaliser un mécanisme agissant sur une tige 52 s'escamotant par rotation, comme c'est le cas dans les variantes décrites précédemment en se référant aux figures 12,15 et 18.

Comme dans le mode de réalisation des figures 1 et 2, la partie des arbres 40' située dans la cuve 10 au-dessus du coeur du réacteur, les boîtes de renvoi d'angle 186 et les pièces 196 et 198 sont logées dans un panier ou châssis 64 qui est mis en place d'un bloc dans la cuve du réacteur. A cet effet, on retrouve sur les arbres 40' des pièces de raccordement 68, et les tiges filetées 48 sont munies d'accouplements élastiques 70 tels que celui qui a été décrit précédemment en se référant à la figure 3.

Le mécanisme qui vient d'être décrit en se référant à la figure 23 présente notamment l'avantage

B 7644-3  GP

de permettre l'obtention d'une étanchéité relative en cas d'accident par dépressurisation, notamment lors de la rupture d'une manchette de doigt de gant 36. En effet, comme l'illustre la figure 23, on peut munir l'arbre 40' d'une pièce 202 jouant le rôle d'un clapet dynamique à l'entrée du doigt de gant.

La variante de réalisation de la figure 24 diffère essentiellement du mode de réalisation de la figure 23 par le fait qu'au lieu d'être disposés en périphérie de la bride de cuve 10, les doigts de gant 38 servant à commander à l'aide des moyens de pilotage 32 et des moyens d'arrêt 34 le pilotage et la chute en sécurité des barres absorbantes, sont placés au-dessus du couvercle 11 de la cuve du réacteur.

Les moyens de pilotage 32 et d'arrêt 34 étant par ailleurs identiques à ceux qui viennent d'être décrit en référence à la figure 23, on voit que l'arbre 40', également animé d'un mouvement de rotation et d'un mouvement de translation, est vertical et entraîne directement en rotation une tige filetée 48 assurant la montée et la descente d'une barre absorbante 26.

Comme dans les modes de réalisation précédents, la transmission à la tige filetée 48 du mouvement de rotation de l'arbre 40' est faite à l'aide d'un accouplement élastique 70 constitué par un carré femelle en prise avec un carré mâle, le carré femelle étant suffisamment profond pour permettre le déplacement en translation de l'arbre 40'.

La transmission du mouvement de translation de l'arbre 40' à la tige verticale 52" commandant la chute en sécurité de la barre absorbante est réalisée par un étrier 196' solidarisé en translation de l'arbre 40' tout en permettant à celui-ci de tourner librement. L'étrier 196' supporte par ailleurs l'extrémité supérieure de la tige 52", comme l'illustre la figure 24.

B 7644-3 GP

Bien entendu, l'accouplement 70 peut avoir une forme géométrique différente sans sortir du cadre de l'invention et peut comporter un système de billes afin de réduire les frottements.

Dans une variante de réalisation non représentée, le même mécanisme peut être utilisé pour commander simultanément plusieurs barres absorbantes. Ce mécanisme comprend alors des transmissions horizontales constituées notamment d'arbres et d'engrenages situés au niveau des extrémités supérieures des tiges filetées 48, et une pièce comparable à la pièce 196' et servant à commander simultanément plusieurs tiges 52".

Dans une autre variante de réalisation non représentée, applicable aux modes de réalisation des figures 23 et 24, l'ensemble magnétique constitué par les moyens de pilotage 32 et par les moyens d'arrêt 34 peut être simplifié. L'entraîneur magnétique 182 (figure 23) est alors utilisé à la fois pour entraîner en rotation l'arbre 40' et pour maintenir celui-ci dans la position axiale correspondant au verrouillage des barres absorbantes sur les chariots 38, à l'encontre des ressorts 196. L'électroaimant 194 peut alors être supprimé.

D'une manière générale, l'invention n'est pas limitée aux modes de réalisation qui viennent d'être décrits à titre d'exemples, mais en couvre toutes les combinaisons opérantes possibles et toutes les variantes. En particulier les barres absorbantes peuvent présenter une forme différente, pourvu qu'elles comportent sur leur hauteur un logement dans lequel vient se placer la partie du mécanisme de pilotage située dans le tube guide 28 (tige filetée 48, chaîne 134) et un logement dans lequel vient se placer la partie du mécanisme d'arrêt situé dans le tube guide (tige 52), lorsque la barre est en position haute dans le tube.

B 7644-3 GP

REVENDICATIONS

1. Dispositif de commande des barres absorbantes (26) susceptibles d'être introduites dans le coeur (14) d'un réacteur nucléaire, afin d'assurer le pilotage et l'arrêt de ce dernier, chacune des barres absorbantes comportant une tête (27) normalement accrochée, par des moyens de liaison (54) déverrouillables à distance, à un organe (38) apte à se déplacer verticalement, sous l'action de moyens de pilotage (32), dans le prolongement d'un boîtier d'assemblage (30) contenant un jeu d'éléments combustibles du coeur du réacteur, des moyens d'arrêt (34) agissant sur les moyens de liaison (54) afin de désolidariser l'organe (38) de la tête de barre (27) correspondante, lorsqu'il est nécessaire de commander la chute en sécurité de cette barre absorbante, les moyens de pilotage (32) et les moyens d'arrêt (34) agissant respectivement sur les organes (38) et sur les moyens de liaison (54) par l'intermédiaire d'un premier mécanisme de transmission (40 à 50) et d'un deuxième mécanisme de transmission (56 à 62, 52), caractérisé en ce que chacun des mécanismes de transmission comporte une partie (48, 52) apte à venir se placer dans un évidement correspondant s'étendant sur la hauteur de chaque barre absorbante, lorsque celle-ci est en position haute.

2. Dispositif selon la revendication 1, caractérisé en ce que les barres absorbantes (26) sont cruciformes, lesdites parties (48, 52) des mécanismes de transmission venant se placer entre les ailes des croix formées par les barres absorbantes, lorsque celles-ci sont en position haute.

3. Dispositif selon l'une quelconque des revendications 1 et 2, caractérisé en ce que ladite partie du premier mécanisme de transmission comprend au

B 7644-3  GP

moins une vis verticale (48) reçue dans un écrou (50) solidaire de l'organe (38) correspondant.

4. Dispositif selon l'une quelconque des revendications 1 et 2, caractérisé en ce que ladite partie du premier mécanisme de transmission comprend deux roues dentées (122, 128) disposées dans le même plan vertical, et une chaîne ouverte (134) engrenée sur les deux roues dentées et fixée par ses deux extrémités à l'organe (38) correspondant.

5. Dispositif selon l'une quelconque des revendications 1 à 4, caractérisé en ce que ladite partie du deuxième mécanisme de transmission est une tige verticale (52)—qui définit en section au moins une surface de came (100) placée en vis-à-vis d'au moins un levier (94) articulé sur ledit organe (38), afin de solliciter l'extrémité inférieure du levier dans un évidement (98) formé dans la tête de barre (27), les moyens d'arrêt (34) agissant sur ladite tige (52) pour imprimer à celle-ci un mouvement de rotation autour de son axe vertical.

6. Dispositif selon la revendication 5, caractérisé en ce que l'axe de la tige verticale (52) est confondu avec celui de la barre absorbante (26) correspondante.

7. Dispositif selon la revendication 5, caractérisé en ce que l'axe de la tige verticale (52') est décalé par rapport à celui de la barre absorbante (26) correspondante.

8. Dispositif selon l'une quelconque des revendications 5 à 7, caractérisé en ce que la tête (27) de la barre absorbante porte au moins un ergot basculant (110) apte à venir en-dessous d'une surface de butée (116, 120) formée à l'extrémité inférieure de la tige (52), lorsque la barre (26) est introduite entièrement dans le coeur du réacteur et lorsque la tige verticale occupe une position dans laquelle le levier (94) est dégagé de l'évidement (98), afin d'empêcher la remontée accidentelle de la barre, ladite surface de butée (116, 120) n'étant plus au-dessus dudit ergot (110) lorsque la tige (52) tourne d'un angle donné pour occuper la position dans laquelle le levier (94) est sollicité dans l'évidement (98), sous l'action de réarmement des moyens d'arrêt (34).

9. Dispositif selon l'une quelconque des revendications 1 à 4, caractérisé en ce que ladite partie du deuxième mécanisme de transmission est une tige verticale (52") qui coopère avec des moyens de transformation de mouvement (142, 144 ; 146, 158), les moyens d'arrêt agissant sur ladite tige par l'intermédiaire du deuxième mécanisme de transmission, parallèlement à son axe vertical, de façon à déplacer la tige en oblique par rapport à cet axe sous l'effet des moyens de transformation de mouvement, ladite tige étant placée en vis-à-vis d'un levier (94') articulé sur ledit organe (38) afin de solliciter l'extrémité inférieure du levier dans un évidement (98') formé dans la tête de barre (27).

10. Dispositif selon la revendication 9, caractérisé en ce que des moyens élastiques (150) agissent sur l'extrémité inférieure de la tige (52") pour la solliciter verticalement vers le bas, de façon à déplacer celle-ci en oblique, en éloignement du levier (94), en cas de rupture de la tige.

11. Dispositif selon l'une quelconque des revendications 9 et 10, caractérisé en ce que les moyens de transformation de mouvement comprennent deux biellettes (142, 144) articulées respectivement entre les extrémités inférieure et supérieure de la tige (52") et un tube guide (28).

12. Dispositif selon la revendication 11, caractérisé en ce que la biellette (144) articulée à l'extrémité inférieure de la tige (52") porte une surface (116") apte à venir se placer au-dessus d'un ergot basculant (110') monté sur la tête de barre (27) lorsque la barre est introduite entièrement dans le coeur du réacteur et lorsque la tige verticale est placée en position basse sous l'action des moyens d'arrêt (34).

13. Dispositif selon l'une quelconque des revendications 9 et 10, caractérisé en ce que les moyens de transformation de mouvement comprennent des rampes inclinées (156) formées à proximité des extrémités de la tige verticale (52") et roulant sur des roulettes (158) montées à l'intérieur d'un tube guide (28).          —

14. Dispositif selon l'une quelconque des revendications précédentes, caractérisé en ce que lesdites parties (48, 52) des mécanismes de transmission sont placées dans des tubes guides verticaux (28) dans lesquels sont reçues les barres absorbantes lorsqu'elles sont en position haute, lesdits organes (38) étant constitués par des chariots coulissant dans les tubes guides.

15. Dispositif selon l'une quelconque des revendications précédentes, caractérisé en ce que chacun des mécanismes de transmission comporte une autre partie (40 à 46, 56 à 62) placée dans un châssis démontable (64) disposé à l'intérieur de la cuve (10) du réacteur, au-dessus de la première partie de ces mécanismes.

16. Dispositif selon la revendication 15, caractérisé en ce que lesdites autres parties des mécanismes de transmission qui sont placées dans le châssis (64) comprennent chacune un arbre vertical (46, 62) au-dessus de chaque tube guide (28), l'extrémité inférieure de chaque arbre étant raccordée par un accouplement démontable (70, 72) à la première partie (48, 52) du mécanisme de transmission correspondant.

17. Dispositif selon la revendication 16, caractérisé en ce que l'accouplement démontable (70, 72) comprend une pièce d'entraînement (78) sollicitée élastiquement vers le bas mais apte à s'effacer vers le haut lors de la mise en place du châssis (64) et de la partie des mécanismes qu'il contient, lorsqu'il existe un décalage angulaire entre cette pièce d'entraînement et ladite première partie du mécanisme de transmission correspondant.

18. Dispositif selon l'une quelconque des revendications précédentes, caractérisé en ce que le premier mécanisme de transmission comprend des arbres de commande (40) traversant la cuve (10) du réacteur pour pénétrer dans des doigts de gant (36) liés à la cuve de façon étanche et être entraînés en rotation par les moyens de pilotage (32), ces derniers étant des entraîneurs magnétiques dont la partie magnétique, liée à l'arbre de commande (40) correspondant, est placée dans le doigt de gant (36) et dont la partie motrice est placée à l'extérieur de la cuve (10) du réacteur et agit au travers de la paroi du doigt de gant.

19. Dispositif selon la revendication 18, caractérisé en ce que les arbres de commande (40) sont creux, les moyens d'arrêt (34) étant placés dans les doigts de gant et associés à chacun des moyens de pilotage (32) et le deuxième mécanisme de transmission comportant des arbres de commande (56) logés à l'intérieur des arbres creux (40) de façon à pouvoir être entraînés en rotation par les moyens d'arrêt (34).

20. Dispositif selon la revendication 18, caractérisé en ce que les moyens d'arrêt (34) sont placés dans les doigts de gant et associés à chacun des moyens de pilotage (32), de façon à maintenir les arbres de commande (40) à l'encontre de moyens élastiques (196) sollicitant ces arbres axialement dans une position correspondant au déverrouillage des moyens de liaison (54).

21. Dispositif selon l'une quelconque des revendications 18 à 20, caractérisé en ce que les arbres de commande (40) sont horizontaux et traversent radialement la bride de cuve (10), de telle sorte que les doigts de gant (36) occupent un espace angulaire inférieur à 180°.

22. Dispositif selon l'une quelconque des revendications 18 à 20, caractérisé en ce que les arbres de commande sont verticaux et traversent le couvercle (11) de cuve, de telle sorte que les doigts de gant (36) sont placés au-dessus de celui-ci.

23. Dispositif selon la revendication 18, caractérisé en ce que les moyens d'arrêt sont placés entièrement à l'intérieur du châssis.

24. Dispositif selon l'une quelconque des revendications précédentes, caractérisé en ce que la tête de barre (27) comprend un deuxième évidement (170), en ce qu'un boîtier (89) est disposé à l'intérieur d'un tube guide (28) et reçoit de façon coulissante un pène (168) sollicité radialement vers l'axe du tube guide par un ressort, de façon à faire saillie dans le deuxième évidement lorsque la barre (26) est introduite entièrement dans le coeur du réacteur et en ce que l'organe (38) porte un doigt (174) qui fait saillie vers le bas de façon à solliciter le pène hors du deuxième évidement lorsque ledit organe est en position basse dans le tube guide (28).

25. Dispositif selon l'une quelconque des revendications précédentes, caractérisé en ce que chacun des moyens de pilotage (32) est constitué par un entraîneur magnétique.

26. Dispositif selon l'une quelconque des revendications précédentes, caractérisé en ce que chacun des moyens d'arrêt (34) comporte un organe mobile dont le déplacement dans le sens correspondant au déverrouillage des moyens de liaison est commandé par la disparition d'un signal.

27. Dispositif selon l'une quelconque des revendications précédentes, caractérisé en ce que des amortisseurs de fin de chute (106) sont placés à l'intérieur de chacun des boîtiers (30) des assemblages combustibles à l'extrémité supérieure de ceux-ci.

28. Dispositif selon l'une quelconque des revendications précédentes, caractérisé en ce que chaque tête de barre comprend un troisième évidement (170), en ce qu'un boîtier est disposé à l'intérieur de chaque boîtier d'assemblage combustible, à l'extrémité supérieure de celui-ci, et reçoit de façon coulissante un pène sollicité radialement vers l'axe du tube d'assemblage, de façon à faire saillie dans le troisième évidement lorsque la barre absorbante est introduite entièrement dans le coeur du réacteur, et en ce que chaque organe (38) porte un deuxième doigt (174) qui fait saillie vers le bas de façon à solliciter le pène hors du troisième évidement lorsque ledit organe est en position basse dans le tube guide.

29. Dispositif de commande selon l'une quelconque des revendications précédentes, caractérisé en ce que chacun des moyens de pilotage (32) agit sur au moins un organe (38) et en ce que le nombre des moyens d'arrêt (34) est égal à celui des moyens de pilotage (32), de telle sorte que chacun des moyens d'arrêt agit sur au moins un moyen de liaison (54) correspondant.

FIG.1

# FIG.2

FIG.3

0095417

FIG.4

FIG.5

0095417

FIG.6

FIG.7

FIG.8

FIG.9

FIG.10

FIG.11

FIG.12

FIG.15

FIG.13

FIG.17

10,16

FIG.16

FIG.14

11,16

FIG.18

FIG.19

FIG.20

12,16

0095417

# FIG.21

FIG. 22

0095417

14,16

FIG.23

FIG.24

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 189 816 (C.E.A.) <br> * Page 6, lignes 19-39; page 7, lignes 1-3; page 10, lignes 10-38; figures 2-5 * | 1,3,18 | G 21 C 7/12 |
| A | FR-A-1 497 507 (C.E.A.) <br><br> * Page 2, colonne de droite (avant dernier alinéa-fin); page 3, colonne de gauche; figures 3-7 * | 1,3,6, 18 | |
| A | DE-A-2 909 793 (KRAFTWERK UNION) <br> * Page 5, lignes 19-28; figure 1 * | 2 | |
| A | FR-A-2 169 279 (INTERATOM) <br> * Page 3, lignes 30-40; page 4, lignes 1-24; figure 1 * | 1,3 | DOMAINES TECHNIQUES RECHERCHES (Int. Cl. 3) <br><br> G 21 C 7/00 |
| A | FR-A-1 415 304 (U.K.A.E.A.) <br> * Page 4, colonne de gauche, dernier alinéa; figure 8 * | 3 | |
| A | US-A-4 002 529 (ANDREA et al.) <br> * Colonne 11, lignes 10-60; figures 23,27 * | 1 | |

Le présent rapport de recherche a été établi pour toutes les revendications

| Lieu de la recherche <br> LA HAYE | Date d'achèvement de la recherche <br> 26-08-1983 | Examinateur <br> GIANNI G.L.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82